# EUROPÄISCHE PATENTSCHRIFT

(11) **EP 4 045 776 B1**
(45) Veröffentlichungstag und Bekanntmachung des Hinweises auf die Patenterteilung: **07.06.2023**
(21) Anmeldenummer: 21765648.7
(22) Anmeldetag: 20.08.2021
(51) Int. Cl.: F01N 3/027, F01N 3/20, F01N 3/00

(54) **ELEKTRISCHES HEIZAGGREGAT**
ELECTRICAL HEATING UNIT
UNITÉ DE CHAUFFAGE ÉLECTRIQUE

(30) Priorität: 28.08.2020 DE 202020104976 U; 01.03.2021 DE 202021100999 U
(43) Veröffentlichungstag der Anmeldung: 24.08.2022
(73) Patentinhaber: HJS Emission Technology GmbH & Co. KG, 58706 Menden (DE)
(72) Erfinder: STEIGERT, Simon, 58706 Menden (DE); KOLL, Jochen, 59755 Arnsberg (DE); RÖSE, Frank, 58706 Menden (DE)
(74) Vertreter: Haverkamp Patentanwälte PartG mbB
(86) Internationale Anmeldenummer: PCT/EP2021/073132
(87) Internationale Veröffentlichungsnummer: WO 2022/043207

(56) Entgegenhaltungen:
- WO-A1-2017/151975
- WO-A1-2017/151975
- FR-A1- 3 085 428
- FR-A1- 3 085 428
- FR-A5- 2 117 287
- FR-A5- 2 117 287
- GB-A- 214 058
- GB-A- 214 058

## Beschreibung

Die Erfindung betrifft ein elektrisches Heizaggregat zum Einbringen in den Abgasstrang einer Brennkraftmaschine, insbesondere stromauf bezüglich eines für seinen Betrieb eine gegenüber Umgebungstemperatur erhöhte Temperatur benötigenden Abgasreinigungsaggregates, etwa eines Katalysators, welches elektrische Heizaggregat eine Einfassung und zumindest ein als Band ausgeführtes, innerhalb der Einfassung gehaltenes Widerstandsheizelement umfasst, wobei das zumindest eine Heizband mäanderförmig und mit seiner Flachseite parallel oder weitgehend parallel zur Längsachse der Einfassung verlaufend angeordnet ist.

Zum Reduzieren der Emissionen einer Brennkraftmaschine, beispielsweise eines in einem Fahrzeug betriebenen Dieselmotors werden Abgasreinigungsaggregate in den Abgasstrang eingeschaltet. Hierbei handelt es sich um Partikelfilter sowie um Katalysatoren, insbesondere Oxidationskatalysatoren und SCR-Katalysatoren. Partikelfilter dienen zur Verminderung von Rußemissionen. Ein SCR-Katalysator dient zur Reduzierung des NOₓ-Ausstoßes. Ein in ein Abgasreinigungssystem integrierter Oxidationskatalysator unterstützt eine passive Regeneration des Partikelfilters und die Umsetzrate am SCR-Katalysator. Zudem kann dieser genutzt werden, um die Abgastemperatur anzuheben. Soll die Abgastemperatur angehoben werden, wird der Oxidationskatalysator mit Kohlenwasserstoffen beaufschlagt, die an diesem exotherm reagieren. Zum Betrieb eines SCR-Katalysators wird ein Reduktionsmittel benötigt. Dieses wird stromauf des Katalysators in den Abgasstrang eingebracht. Eingesetzt wird hierfür eine wässrige Harnstofflösung. Während eine Abscheidung von Rußpartikeln mit einem Partikelfilter temperaturunabhängig erfolgt, müssen sich die Katalysatoren in einem bestimmten Temperaturbereich befinden, damit diese ihre abgasreinigende Funktion - die Katalyse von bestimmten Stoffen - ausführen können. Dessen untere Temperaturgrenze wird auch als Light-Off-Temperatur oder Aktivierungstemperatur angesprochen. Die Umsetzrate ist bei einem solchen Katalysator bei Erreichen der Aktivierungstemperatur noch gering. Diese steigert sich mit zunehmender Temperatur bis zu einem Temperaturmaximum. Dieses wiederum ist abhängig von der Auslegung des Katalysators. Die Aktivierungstemperatur liegt bei derartigen Katalysatoren bei etwa 110 bis 130 °C, wobei auch dieser Wert abhängig von der konkreten Auslegung des Katalysators ist.

Erwärmt werden die in den Abgasstrang eingeschalteten Katalysatoren in aller Regel durch das diese anströmende bzw. durchströmende Abgas. Dieses hat unmittelbar nach dem Motorstart noch keine hinreichende Temperatur und es dauert eine gewisse Zeit, mitunter durchaus einige Minuten, bis durch das Abgas ein solcher Katalysator seine Aktivierungstemperatur erreicht hat. In einigen Fällen ist man bestrebt, zumindest einen der Katalysatoren möglichst motornah zu verbauen, damit das Abgas bis zum Erreichen des Katalysators möglichst wenig abkühlt. Bei Systemen, die mehrere hintereinandergeschaltete Abgasreinigungsaggregate verwenden, beispielsweise einen Oxidationskatalysator, gefolgt von einem Partikelfilter und dieser wiederum wiedergefolgt von einem SCR-Katalysator versteht es sich, dass die weiter stromabwärts befindlichen Katalysatoren, wie etwa bei den vorstehend beschriebenen Beispiel der SCR-Katalysator, erst nach einer deutlich längeren Motorbetriebszeit auf Betriebstemperatur durch das Abgas erwärmt sind. Um eine Erwärmung von Katalysatoren zu beschleunigen, sind Heizelemente bekanntgeworden, die stromauf eines Abgasreinigungsaggregates in den Abgasstrang eingeschaltet sind. Diese elektrischen Heizelemente befinden sich innerhalb der Abgasströmung. Das vorbeiströmende Abgas wird bei einem Betrieb eines solchen Heizelementes erwärmt und kann entsprechend mehr Wärme an das dem Heizelement nachgeschaltete Abgasreinigungsaggregat abgeben. Gemäß einer anderen Ausgestaltung ist vorgesehen, das Katalysatorsubstrat selbst widerstandselektrisch zu erwärmen, um dieses rascher auf seine Aktivierungstemperatur zu bringen. Bei einer solchen Ausgestaltung sind an der Mantelfläche des Katalysatorsubstrates ein oder mehrere Heizleiter angeordnet, die bei Bestromung erwärmt werden und diese Wärme sodann in das zu erwärmende Katalysatorsubstrat übertragen. Bei derartigen Heizsystemen handelt es sich um übliche Widerstandsheizsysteme. Die Heizleiter werden auf einer gewissen Temperatur gehalten und so lange bestromt, bis das Abgasreinigungsaggregat bzw. das Katalysatorsubstrat seine Aktivierungstemperatur erreicht hat. Die erforderliche Zeit zum Erwärmen des Abgasreinigungsaggregates ist abhängig von seiner Größe. Bei Katalysatoren werden vielfach Keramiksubstrate, beispielsweise aus Cordierit eingesetzt, auf denen die katalytische Beschichtung aufgebracht ist.

Ein elektrisches Heizaggregat für diese Zwecke ist aus US 10,309,279 B2 bekannt. Dieses Heizaggregat verfügt über eine Vielzahl einzelner länglicher Heizelemente, die von einer radial außenseitigen Einfassung sich entlang einer gekrümmten Bahn oder in Annäherung an eine solche gekrümmte Bahn in einzelnen gegeneinander abgewinkelten geraden Abschnitten von der radial außenseitigen Einfassung zu einem im Zentrum befindlichen Rahmenteil erstrecken. Gemäß einer Ausgestaltung können die Heizelemente als Heizbänder ausgeführt sein. Die Flachseite der Heizbänder verläuft parallel zur Längsachse der Einfassung. Eine erste Gruppe elektrischer Heizelemente erstreckt sich zwischen der äußeren Einfassung und dem zentralen Rahmenteil entlang einer ersten Krümmungsrichtung. Eine zweite Gruppe von Heizelementen ist gegensinnig orientiert. In den Kreuzungspunkten sind die Heizelemente miteinander verbunden. Die Ausbildung der Heizelementfläche ist bei diesem Stand der Technik, dessen Heizleistung mit etwa 5 kW bei einem Bordnetz von 48 V angegeben ist, recht kompliziert. Allerdings wird der Einsatz einer Vielzahl einzelner Heizelemente als erforderlich angesehen, um die benötigte Querschnittsfläche mit ausreichend erhitztem Material zu füllen. Elektrisch kontaktiert werden die länglichen Heizelemente über die radial äußere Einfassung. Ein zu berücksichtigender Aspekt bei der Erwärmung von Widerstandsheizelementen, insbesondere von Heizbändern auf die gewünschten Temperaturen, die in diesem Stand der Technik zwischen 200° und 1.000° C angegeben werden, ist die thermische Ausdehnung derselben. Infolge einer thermischen Ausdehnung dürfen insbesondere keine Kurzschlüsse entstehen.

Ein elektrisches Heizgerät mit den Merkmalen des Oberbegriffs des Anspruchs 1 ist aus JP 04339122 A1 bekannt. Das Heizband dieses vorbekannten Heizaggregates ist mäanderförmig und mit seiner Flachseite parallel zur Längsachse der Einfassung verlaufend angeordnet. Im Bereich der Umbiegungen ist das Heizband in als Isolatoren ausgeführte Haltestrukturen eintauchend gehalten.

WO 2017/151975 offenbart ein Heizaggregat zum Erwärmen von Fluiden. Als Heizelement wird ein Heizband eingesetzt, welches ebenfalls mäanderförmig angeordnet ist. Gehalten ist dieses durch die Einfassung miteinander verbindender dielektrische Halter.

JP 05059939 A offenbart ein mäanderförmig geformtes Heizband, integriert in das Substrat eines Katalysators. Haltemittel zum Halten des Heizbandes sind daher bei diesem Stand der Technik nicht erforderlich.

Die mit höheren Spannungen betriebenen Bordnetze vor allem zukünftiger Fahrzeuge, die mit Spannungen von 48 V oder mehr betrieben werden, ermöglichen den Einsatz besonders leistungsstarker Heizaggregate. Umso wichtiger ist die Gewährleistung eines bestimmungsgemäßen Betriebes auch bei höheren Temperaturen.

Ausgehend von dem vorstehend diskutierten Stand der Technik liegt der Erfindung somit die Aufgabe zugrunde, ein elektrisches Heizaggregat zum Einbringen in den Abgasstrang einer Brennkraftmaschine vorzuschlagen, dessen beheiztes Widerstandsheizelement eine einfache Herstellung und einen sicheren Betrieb auch bei hohen elektrischen Leistungen gewährleistet.

Gelöst wird diese Aufgabe erfindungsgemäß durch ein eingangs genanntes elektrisches Heizaggregat, bei dem das Heizaggregat zumindest eine stirnseitig bezüglich des Heizbandes angeordnete und an die Einfassung mechanisch angeschlossene Tragstruktur mit schlitzförmigen Heizbandlagern zum Halten des Heizbandes innerhalb der Einfassung umfasst, in welche schlitzförmigen Heizbandlager das Heizband mit einem Randabschnitt eingreift und über welche Tragstruktur das Heizband gegenüber der Einfassung elektrisch isoliert ist.

Bei diesem elektrischen Heizaggregat ist das zumindest eine Heizband mäanderförmig verlaufend innerhalb der Einfassung gehalten. Ein Heizband in eine Mäanderform zu bringen, ist mit einfachen Mitteln möglich. Dies erfordert lediglich das Bereitstellen von Umbiegestellen, um typischerweise parallel verlaufende Heizbandabschnitte bereitzustellen. Die Schmalseite eines solchermaßen geformten Heizbandes weist anströmseitig entgegen der Anströmrichtung des Abgases, stellt mithin für das anströmende Abgas kein nennenswertes Strömungshindernis dar, insbesondere kein solches, welches den Abgasgegendruck nennenswert erhöht. Die Materialstärke des Heizbandes beträgt typischerweise etwa 0,5 - 0,7 mm, kann jedoch auch dünner, aber auch dicker ausgelegt sein. Zum Halten des Heizbandes innerhalb der Einfassung dient zumindest eine Tragstruktur. Diese ist stirnseitig bezüglich des Heizbandes angeordnet und an die Einfassung mechanisch angeschlossen. Typischerweise verfügt das Heizaggregat über zwei Tragstrukturen, wobei eine anströmseitig und die andere abströmseitig bezüglich des Heizbandes angeordnet ist. Werden zwei Tragstrukturen verwendet, kann die Breite des Heizbandes (Erstreckung in Richtung der Längsachse der Einfassung) entsprechend groß ausgebildet sein. Bei bezüglich ihrer Breite schmaleren Heizbändern kann eine nur an einer Stirnseite vorhandene Tragstruktur ausreichend sein. Die Tragstruktur ist mit schlitzförmigen Heizbandlagern ausgerüstet. In die schlitzförmigen Heizbandlager greift das Heizband mit einem Randabschnitt ein. Ferner ist vorgesehen, dass das Heizband über die Tragstruktur gegenüber der Einfassung elektrisch isoliert ist.

Bei einer Konzeption des Heizaggregates mit jeweils einer stirnseitig angeordneten Tragstruktur ist das Heizband in Längserstreckung der Einfassung innerhalb dieser durch die Tragstrukturen formschlüssig gehalten. Dieses erlaubt eine Ausbildung der Heizbandlager als Los-Lager, sodass bei einer thermischen Längenausdehnung des Heizbandes der in den Heizbandschlitz eines Heizbandlagers eingreifende Teil des Heizbandes in Richtung seiner Längserstreckung verschieblich gehalten ist. Die mäanderförmige Ausdehnung des Heizbandes kann genutzt werden, um durch entsprechende Anordnung von Heizbandlagern in unmittelbarer Nachbarschaft zu einer oder mehreren Heizbandumbiegungen das Heizband in Richtung der Längserstreckung seiner typischerweise parallel verlaufenden Heizbandabschnitte zu fixieren. In Querrichtung hierzu sind die Heizbandabschnitte durch Eingreifen in die schlitzförmigen Heizbandlager fixiert. Daher ist es ausreichend, wenn die Tragstruktur nur an wenigen Stellen an die innere Mantelfläche der Einfassung mechanisch angeschlossen und damit fixiert ist.

Vorteilhaft bei diesem Heizaggregat mit seiner Tragstruktur ist, dass das Heizband auch im Bereich seiner Heizbandumbiegungen wirksam Wärme abgeben kann und die Heizbandumbiegungen auch abgasangeströmt sind. Hierdurch wird ein Überhitzen der Heizbandumbiegungen ebenso vermieden, wie die Einbuße an Strömungsquerschnittsfläche, was im Falle einer radialen Lagerung des Heizbandes in Kauf zu nehmen ist. Insofern kann bei diesem Heizaggregat die Gesamtquerschnittsfläche der Einfassung für die Abgasdurchströmung genutzt werden. Dieses reduziert je nach Blickwinkel den erforderlichen Durchmesser der Einfassung bzw. den Abgasgegendruck.

Gemäß einer Ausführung einer solchen Tragstruktur ist diese nach Art eines Gerüstes, gebildet durch mehrere, quer zum Längsverlauf der Heizbandabschnitte verlaufenden Streben gebildet. Die Streben tragen an ihrer zu dem Heizband weisenden Seite die schlitzförmigen Heizbandlager. Die Streben können aus diesem Grunde auch als Kammleisten angesprochen werden. Eine solche Strebe kann ein leistenförmiger Metallabschnitt sein, der mit seiner Schmalseite zu dem Heizband weist und dessen Schmalseite die schlitzförmigen Heizbandlager trägt. Eine solche Strebe kann in ihrer Erstreckung über die Stirnfläche des Heizbandes mehrfach gewinkelt sein, wenn dieses beispielsweise aufgrund der Querschnittsgeometrie der Einfassung sinnvoll ist. Bei einer solchen Auslegung der Tragstruktur wird durch derartige Streben, deren Schmalseite durch das Abgas angeströmt ist, der Abgasgegendruck ebenfalls nicht nennenswert erhöht. Zugleich ist durch eine solche Auslegung der Streben bzw. der daraus gebildeten gerüstartigen Tragstruktur dieses mit einer hinreichenden Stabilität, etwa gegenüber Verwindungen, ausgestattet. Eine solche gerüstartige Tragstruktur kann durch mehrere einzelne, nicht miteinander verbundene Streben bereitgestellt sein. Bei größeren Querschnittsflächen wird man zur Stabilisierung der Streben und damit der Tragstruktur diese durch Querverbinder miteinander verbinden. Möglich ist auch die Auslegung zweier solcher Streben als Doppelstrebe, die hutförmig profiliert sind und wobei diese beiden Streben mit ihrer Öffnungsseite zueinander weisend und mit ihren Schenkeln aneinander grenzend verbunden sind. Eine solche Auslegung eines Teils einer solchen Tragstruktur ist sinnvoll, wenn das Heizband in dem Zentrum seiner durch die mäanderförmige Ausbildung flächigen Erstreckung zwei mit Abstand zueinander angeordneter Streben, beispielsweise bei einer kreisringförmigen Einfassung gehalten werden soll.

Eine elektrische Isolierung des Heizbandes gegenüber der Einfassung kann durch aus einem elektrisch nicht leitenden Material, etwa einer Keramik, hergestellte Lagerelemente bereitgestellt werden, die ihrerseits das schlitzförmige Heizbandlager aufweisen. Derartige Lagerelemente sind an die Tragstruktur angeschlossen. Bei einer Auslegung der Tragstruktur mit Streben, hergestellt aus Metallleisten, kann die zu dem Heizband weisende Seite an denjenigen Stellen, an denen ein solches Lagerelement zu positionieren ist, Ausnehmungen, typischerweise U-förmige Ausnehmungen, aufweisen, in die sodann ein solches, beispielsweise aus Keramik hergestelltes Lagerelement eingesetzt und gehalten ist. Eine stoffliche Verbindung ist möglich, jedoch nicht unbedingt erforderlich, und zwar dann nicht, wenn eine solche Tragstruktur zu beiden Stirnseiten des Heizbandes angeordnet ist und die Lagerelemente in Richtung der Längserstreckung der Heizbandabschnitte formschlüssig in die Ausnehmungen für die Lagerelemente eingreifen. Ein Anschluss von solchen Lagerelementen an die Tragstruktur kann, wenn gewünscht, durch Verwendung eines geeigneten Klebers oder auch durch eine Schweißverbindung oder auch durch jede andere hierfür geeignete Verbindungsart vorgenommen werden.

Typischerweise sind bei diesem elektrischen Heizaggregat die Heizbandlager, also diejenigen Lager, die das zumindest eine Widerstandsheizelement halten, unter Zwischenschaltung von Lagerelementen an die Tragstruktur angeschlossen. Die Lagerelemente sind elektrisch nicht leitend, sodass das Widerstandsheizelement gegenüber dem Traggerüst elektrisch isoliert ist. Um den besonderen Anforderungen an ein solches elektrisches Heizaggregat zum Erwärmen eines Gasstroms, insbesondere wenn das elektrische Heizaggregat auf Temperaturen von 700°C - 800°C erwärmt wird und das Heizaggregat beispielsweise auch bei einem Einsatz desselben in dem Abgasstrang einer Brennkraftmaschine auch Temperaturen von 900°C - 950°C, wie diese bei Personenkraftwagen durchaus auftreten können, standhalten soll, sind gemäß einer Ausgestaltung die Lagerelemente jeweils in einer Lagerelementausnehmung der Tragstruktur gehalten. Bei einer solchen Lagerelementausnehmung kann es sich um eine U-förmige Ausnehmung handeln, in die ein solches Lagerelement eingesetzt ist. Gemäß einer ersten Lösungsalternative sind die Lagerelemente unter Zwischenschaltung eines Ausgleichselementes an die Tragstruktur angeschlossen. Bei dem Ausgleichselement handelt es sich um einen strukturierten Aktivlotstreifen bzw. einen Abschnitt eines solchen Aktivlotstreifens. Dieser ist durch eine Wechselfolge von ersten und zweiten Abschnitten gebildet, welche ersten und zweiten Abschnitte durch Stege miteinander verbunden sind. Die ersten und zweiten Abschnitte sind in Richtung der Ausgleichswirkung des Ausgleichselementes und somit in Abstandsrichtung zwischen dem Lagerelement und der Lagerelementaufnahme versetzt zueinander angeordnet. Die ersten Abschnitte sind mit dem einen Fügepartner, beispielsweise der Lagerelementaufnahme, und die zweiten Abschnitte mit dem anderen Fügepartner, dem in einer Lagerelementausnehmung befindlichen Lagerelement verlötet. Damit bildet der Aktivlotstreifen nicht nur das Ausgleichselement zum Kompensieren von Herstellungstoleranzen und zum Kompensieren unterschiedlicher Wärmeausdehnungskoeffizienten zwischen dem Lagerelement und der Tragstruktur. Der Aktivlotstreifen dient zugleich zum Herstellen der gewünschten Fügeverbindung zwischen dem Lagerelement und der Lagerelementaufnahme. Damit sind die Lagerelemente unverlierbar an die Tragstruktur angeschlossen und zugleich in einer Lagerelementaufnahme aufgrund des strukturierten Aktivlotstreifens als Ausgleichselement gelagert. Das Besondere bei diesem Konzept ist, dass die die ersten und zweiten Abschnitte verbindenden Stege frei liegen, mithin keinen Kontakt zu einem der beiden Fügepartner haben, und daher weder mit dem Lagerelement noch mit der Lagerelementaufnahme verlötet sind. In geschickter Weise wird durch die Verwendung eines solchermaßen strukturierten Aktivlotstreifens die Eigenschaft desselben genutzt, dass eine Lötverbindung nur dort stattfindet, wo der Aktivlotstreifen an einem Fügepartner anliegt, also beispielsweise mit seinen ersten Abschnitten an der Lagerelementausnehmung und mit seinen zweiten Abschnitten an dem Lagerelement. Handelt es sich bei der Strukturierung des Aktivlotstreifens um eine sinusförmige Wellung, liegen die ersten und zweiten Abschnitte jeweils mit ihren voneinander wegweisenden Scheiteln an einem der beiden Fügepartner an. Dies ist grundsätzlich ausreichend, da zwischen dem Lagerelement und der Lagerausnehmung bzw. der Tragstruktur in aller Regel keine Scherkräfte aufgefangen werden müssen. Verwendet werden können auch Aktivlotstreifen, die eine andere Strukturierung, die die vorgesehene Wechselfolge von ersten und zweiten Abschnitten aufweist, beispielsweise eine trapezförmige oder sägezahnförmige Profilierung oder eine Mischform aus unterschiedlichen Querschnittsprofilierungen aufweisen. Dann liegen die ersten Abschnitte und die zweiten Abschnitte mit einer der Strukturierung entsprechenden größeren Fläche an dem jeweiligen Fügepartner an.

Das für die vorbeschriebenen Zwecke eingesetzte Aktivlot ist hinsichtlich seiner Fügetemperatur so ausgewählt, dass diese höher ist als die maximal zu erwartende Gastemperatur, die das elektrische Heizaggregat durchströmen kann. Wird das Heizaggregat etwa in den Abgasstrom einer Brennkraftmaschine, beispielsweise eines Kraftfahrzeuges, eingeschaltet, ist mit Abgastemperaturen von 900°C - 950°C zu rechnen. In einem solchen Fall wird man ein Aktivlot verwenden, welches bei Temperaturen oberhalb dieser Temperatur, beispielsweise bei einer Temperatur von 1.000°C bis 1.050°C, verlötet wird.

Unter dem Begriff "Aktivlot" ist im Rahmen dieser Ausführungen ein Lot zu verstehen, welches ohne vorherige Benetzung eines oder beider der Fügepartner diesen dort benetzt, wo das Aktivlot bei entsprechender Temperatur an einen Fügepartner anliegt. Gefügt wird in einem Vakuumofen. Aktivlote enthalten oberflächenaktive Elemente, die für die gewünschte Benetzung mit Sauerstoff aus dem Fügepartner reagieren. Aus diesem Grunde wird in einem Vakuumofen gefügt. Eine solche Reaktion findet nur an den Stellen des Aktivlotstreifens statt, in denen dieser an einen Fügepartner anliegt, aus dem der für die Reaktion erforderliche Sauerstoff stammt.

Gemäß einer anderen Auslegung der Anbindung der Lagerelemente an die Tragstruktur ist vorgesehen, dass die Lagerelemente jeweils in einer Lagerelementaufnahme formschlüssig gehalten sind. Zu diesem Zweck ist eine solche Lagerelementausnehmung in Richtung zur Stirnfläche der Tragstruktur hinterschnitten. Ferner sind Mittel vorgesehen, dass ein solches in eine Lagerelementausnehmung eingesetztes Lagerelement in Querrichtung zur Ebene der Lagerelementausnehmung formschlüssig darin gehalten ist. Hierfür können beispielsweise entsprechend konturierte Schließbleche eingesetzt werden, von denen jeweils eines auf jeder Seite der die Lagerelementausnehmungen bereitstellenden Tragstruktur angebracht sind. Diese Schließbleche verfügen über einen über die seitliche Öffnung einer Lagerelementausnehmung vorkragenden Abschnitt. Bei einer solchen Ausgestaltung ist der Einsatz eines Ausgleichselementes nicht zwingend vorgesehen, kann jedoch Vorteile haben. Bei einer solchen Ausgestaltung braucht ein solches Ausgleichselement, da das Lagerelement formschlüssig in einer Lagerelementausnehmung gehalten ist, nicht als Aktivlotstreifen ausgeführt sein.

Bei mit größerer Querschnittsfläche konzipierten Heizaggregaten wird man die Tragstruktur typischerweise mit mehreren, die schlitzförmigen Heizbandlager aufweisenden Streben ausführen. So können zwischen zwei randlichen Streben, die sich in unmittelbarer Nachbarschaft zu der Umbiegungszone des Heizbandes befinden, ein oder auch mehrere weitere Streben angeordnet sein. Dann ist jeder Heizbandabschnitt je nach Auslegung des Traggerüstes mit mehreren, maximal einer der Anzahl an vorgesehenen Streben entsprechenden Anzahl an Heizbandlagern gehalten. Durch diese kann einer thermischen Längenausdehnung auf zweierlei Weise begegnet werden. Es gibt die Möglichkeit, die Heizbandlager als Los-Lager auszubilden, sodass ein darin mit einem Randabschnitt eingreifender Heizbandabschnitt hinsichtlich seiner Längenausdehnung durch die Heizbandlager nicht beeinträchtigt ist. Das Vorsehen einer oder mehrerer, Heizbandlager tragenden Streben zwischen zwei randlichen Streben erlaubt jedoch auch die Möglichkeit einer Ausbildung der Heizbandlager als Fest-Lager, durch die eine Bewegung des darin eingreifenden Heizbandabschnittes in Richtung seiner Längserstreckung unterbunden ist. Die Länge des Heizbandabschnittes ist dann in eine entsprechende Anzahl an Sektoren unterteilt, die bezüglich einer thermischen Ausdehnung voneinander durch die Heizbandlager entkoppelt sind. Das Maß einer ausdehnungsbedingten Deformation, die sich in einem Durchbiegen eines Heizbandabschnittes bemerkbar macht, ist dadurch kontrollierbar, sodass Kontakte zwischen benachbarten Heizbandabschnitten auch bei Erwärmen derselben auf höhere Temperaturen vermieden sind. Möglich ist auch die Konzeption eines Traggerüstes mit Heizbandlagern, von denen einige als Fest-Lager und andere als Los-Lager ausgeführt sind. Bei einer solchen Ausgestaltung können die Heizbandlager der beiden randlichen, in unmittelbarer Nachbarschaft zu der durch die mäanderförmige Auslegung bedingten Umbiegungszone des Heizbandes befindlichen Streben als Fest-Lager ausgeführt sein, während diejenigen der einen oder mehreren zwischen diesen beiden Streben befindlichen Streben Los-Lager sind. Bei der Verwirklichung einer solchen Tragstruktur ist Sorge dafür getragen, dass die Umbiegungen des Heizbandes auch bei einer extremen Wärmeausdehnung des Heizbandes nicht in Kontakt mit der Einfassung gelangen oder zu nah an die innere Oberfläche derselben gelangen. Damit bleibt die durch das Abgas bereitgestellte elektrische Isolierung zwischen dem Heizband und der typischerweise aus Stahl bestehenden Einfassung auch bei hohen Temperaturen erhalten.

Eine thermische Längenausdehnung kann auch durch quer zur Längserstreckung der Heizbandabschnitte in diese eingebrachte Gelenkzonen kompensiert werden. Bereitgestellt werden kann eine solche Gelenkzone durch eine sich über die Breite des Heizbandes und sich somit parallel zur Strömungsrichtung des das Heizaggregat durchströmenden Abgases erstreckende Sicke. Diese gegenüber der Ebene des Heizbandabschnittes geschaffene Ausbauchung reagiert bezüglich der angrenzenden Heizbandabschnitte scharnierartig. Eine solche Ausbildung des Heizbandes ist vor allem bei einem Anschluss der Tragstruktur über Fest-Lager an das Heizband sinnvoll.

Das Heizband kann auch in Richtung seiner Längserstreckung folgende Versteifungsstrukturen, wie etwa Sicken, aufweisen. Die Strukturen sind von der Ebene des Heizbandes bzw. seiner Heizbandabschnitte ausgestellt und daher von dem durchströmenden Abgas angeströmt. Dieses sorgt für Turbulenzen und demzufolge einen besseren Wärmeübergang von dem erwärmten Heizband auf das demgegenüber relativ kühle Abgas. Möglich ist auch eine Ausgestaltung, bei der derartige Versteifungsstrukturen einen Durchbruch des Heizbandabschnittes beinhalten und das Abgas bei Beaufschlagen einer solchen Struktur, die beispielsweise haubenartig ausgestellt sein kann, auf die andere Seite des Heizbandes gelenkt wird. Auch dieses begünstigt einen Wärmeübergang von Wärme in den Abgasstrom.

Infolge der mäanderförmigen Formung des Heizbandes verläuft der jeweilige letzte Heizbandabschnitt parallel oder annähernd parallel zur inneren Oberfläche der Einfassung. Daher ist ein elektrischer Anschluss des Heizbandes auf einfache Weise möglich, und zwar beispielsweise unter Verwendung eines elektrischen Anschlussbolzens, der die Einfassung durchgreift und der mit dieser dauerhaft mechanisch verbunden ist, typischerweise mit dieser verschweißt ist. Die in radialer Richtung nach außen weisende Flachseite des diesbezüglich letzten Heizbandabschnittes bietet aufgrund ihrer Fläche hinreichend Möglichkeiten, den elektrischen Leiter eines solchen elektrischen Anschlussbolzens daran anschließen zu können, beispielsweise durch Anschweißen desselben.

Der mäanderförmige Verlauf des Heizbandes kann eine einfache Mäanderform aufweisen. Eine solche einfache Mäanderform kann, wie dieses in einem Ausführungsbeispiel vorgesehen ist, durch eine zweite Mäandrierung überlagert sein. Die zweite Mäandrierung verläuft typischerweise rechtwinklig zu der ersten Mäandrierung des Heizbandes. Dieses erlaubt eine Auslegung der ersten Mäandrierung mit gleicher oder auch sich ändernder Schenkellänge, welcher erste Mäandrierung wiederum in eine Mäanderform gelegt ist, sodass mehrere Mäanderstränge der ersten Mäandrierung nebeneinander liegen. Bei einer solchen Formgebung des Heizbandes können zum Füllen der Querschnittsfläche mehrere Mäanderstränge der zweiten Mäandrierung nebeneinander liegen. Bei einer geraden Anzahl an solchen Mäandersträngen der zweiten Mäandrierung können die elektrischen Anschlüsse an derselben Seite des Heizaggregates angeordnet sein. Dieses ist für die elektrische Leitungsführung am Fahrzeug zweckmäßig. Vorteilhaft bei einer solchen Auslegung des Heizelementes ist, dass über die Querschnittsfläche des elektrischen Heizaggregates eine größere Heizbandlänge untergebracht werden kann, wodurch das Heizband und damit das Heizaggregat mit einer größeren Heizleistung betrieben werden kann. Zudem ist ein solchermaßen geformtes Heizband aufgrund der kürzeren Schenkel der ersten Mäandrierung besonders formstabil. Aus diesem Grunde werden grundsätzlich weniger Heizbandlager zum Halten des Heizbandes benötigt. Je nach Auslegung der Geometrie eines solchen zweifach mäandrierend geformten Heizbandes können gegenüber einem einfach mäandrierten Heizband durchaus 15 bis 20 % an Heizbandlagern gespart werden.

Da bei einem solchermaßen geformten Heizband die große Mehrzahl der Umbiegungen von der Einfassung beabstandet sind, kann das Heizband auch an diesen gelagert werden. Eine Lagerung des Heizbandes an Schenkeln und Umbiegungen der ersten Mäandrierung fixiert das Heizband in zwei Richtungen.

Die Amplitude der ersten Mäandrierung kann über die Mäanderstränge der diese überlagernden zweiten Mäandrierung gleich sein. Durchaus möglich ist es zum optimalen Füllen der Querschnittsfläche des Heizaggregates auch, dass beispielsweise die randlichen Mäanderstränge zu ihrer Mitte hin eine größer werdende Amplitude ihrer ersten Mäandrierung aufweisen. Zweckmäßig ist dieses beispielsweise bei einem Heizaggregat mit einer runden, insbesondere kreisrunden Querschnittsgeometrie. Durch die Variation der Amplitude der ersten Mäandrierung und der diese überlagernden zweiten Mäandrierung kann die Heizbandgeometrie an quasi jede beliebige Querschnittsgeometrie des Heizaggregates angepasst werden. Hierunter sind beispielsweise ovale oder auch sechseckige Querschnittsgeometrien zu subsumieren, nur um einige Beispiele zu geben. Durch die zweite Mäandrierung gelingt dieses, ohne dass die Amplitude der ersten Mäandrierung Größen aufweisen muss, dass die sich in Richtung der Amplitude erstreckenden Schenkel eine Länge aufweisen, dass diese zum Beibehalten der gewünschten Formstabilität auch während der Erwärmung mit zusätzlichen Lagerelementen fixiert werden müssten.

Ferner konnte bei einer solchen Auslegung des Heizbandes eine bessere Temperaturgleichverteilung über die Querschnittsfläche des Heizaggregates beobachtet werden.

Bei dem erfindungsgemäßen elektrischen Heizaggregat ist es durchaus möglich, mehrere Heizbänder in Strömung der Richtung des Abgases hintereinander anzuordnen.

Die mit einem solchen elektrischen Heizaggregat mögliche elektrische Leistung wird über die Dimensionierung des Heizbandes vorgenommen, das heißt: Über seine Länge und seine Querschnittsfläche.

Bei einem solchen elektrischen Heizaggregat kann die sich über die Querschnittsfläche des Heizaggregates erstreckende Tragstruktur genutzt werden, um durch eine entsprechende Auslegung von Strömungsdurchbrechungen diese zugleich als Gleichverteilungselement zu nutzen. Erreicht werden kann dieses durch Vorsehen von unterschiedlichen Durchströmungsöffnungen und/oder durch Anordnen von Durchströmungsöffnungen nach Art eines Rasters, wobei die Durchströmungsöffnungen zum Zwecke der gewünschten Strömungsgleichverteilung über die Querschnittsfläche entsprechend angeordnet sind. Erreicht wird hierdurch, dass der anströmende Abgasstrom über seine Querschnittsfläche gleichmäßig, jedenfalls sehr viel gleichmäßiger erwärmt wird mit dem Vorteil, dass dann das elektrische Heizaggregat entsprechend näher an dem zu erwärmenden Abgasreinigungsaggregat angeordnet werden kann. Schließlich muss dann keine zusätzliche Strömungsstrecke für die Temperaturgleichverteilung zwischen dem Heizaggregat und dem Abgasreinigungsaggregat bei der Auslegung des Abgasreinigungssystems berücksichtigt werden. Neben einer Gleichverteilung der Temperatur bewirkt eine solchermaßen ausgelegte Tragstruktur auch eine Gleichverteilung von im Abgasstrom ggf. mitgeführten Stoffen, wie beispielsweise ein darin eingebrachtes Reduktionsmittel, das für den Betrieb eines SCR-Katalysators benötigt wird.

Vorteilhafterweise befindet sich eine solchermaßen konzipierte Tragstruktur an der Anströmseite des Heizbandes.

Mit einem solchen elektrischen Heizaggregat können bei einem mit entsprechender Spannung betriebenen Bordnetz eines Fahrzeuges kurzfristig Leistungen von durchaus über 10 kW bereitgestellt werden, beispielsweise Leistungen von etwa 15 kW und mehr. Besonders vorteilhaft ist der kurzzeitige Betrieb eines solchen Heizaggregates vor dem Motorstart. Das Heizaggregat selbst ist typischerweise unmittelbar stromauf eines Katalysators angeordnet, damit sich dieser zumindest auf seiner Light-Off-Temperatur befindet, wenn die Brennkraftmaschine gestartet wird. Eine Erwärmung des Katalysators erfolgt durch Wärmeübertragung durch das innerhalb des Heizaggregates erwärmte Gas, durch Wärmestrahlung und durch Wärmeleitung. Letzteres erfolgt über die Einfassung, die sich typischerweise in dasjenige des in Strömungsrichtung des Abgases nachgeschalteten Katalysators fortsetzt. Zudem wird Wärme in dem Heizband und dem Traggerüst, vor allem, wenn dieses aus Metall hergestellt ist, gespeichert, sodass das bei bzw. unmittelbar nach einem Motorstart von der Brennkraftmaschine ausgestoßene Abgas vor Erreichen des dem Heizaggregat nachgeschalteten Katalysators nicht nur auf einen vorerwärmten, oberhalb seiner Light-Off-Temperatur befindlichen Katalysator auftrifft, sondern seinerseits durch Aufnahme von Wärme aus dem Heizaggregat bereits vorerwärmt ist. Dieses wirkt einem Auskühlen des vorerwärmten Katalysators durch das zunächst kühle anströmende Abgas entgegen. Eine Erwärmung des Heizbandes auf 600° - 700° C wird als ausreichend angesehen, um bereits bei einem Motorstart eine effektive Abgasreinigung, insbesondere in Bezug auf eine Entstickung durchführen zu können.

Das Heizaggregat kann selbstverständlich auch bei laufendem Betrieb der Brennkraftmaschine betrieben werden, um einen Temperaturhub im Abgas herbeizuführen, sollte die Abgastemperatur für die an einem nachgeschalteten Abgasreinigungsaggregat vorzunehmende Reaktion nicht hinreichend sein.

Die Erfindung ist nachstehend anhand eines Ausführungsbeispiels unter Bezugnahme auf die beigefügten Figuren beschrieben. Es zeigen:
- **Fig. 1:**: Ein schematisiertes Blockschaltbild einer Abgasreinigungsanlage einer Brennkraftmaschine mit zwei Katalysatoren und jeweils einem jedem Katalysator vorgeschalteten elektrischen Heizaggregat,
- **Fig. 2:**: eine Stirnseitenansicht eines Heizaggregates der Abgasreinigungsanlage der Figur 1,
- **Fig. 3:**: eine Darstellung des Heizaggregates der Figur 2 nach Art einer Explosionsdarstellung,
- **Fig. 4:**: eine Teilschnittdarstellung des Heizaggregates der Figur 2,
- **Fig. 5:**: eine Schnittdarstellung durch einen Abschnitt einer Strebe als Teil einer Tragstruktur mit einem in einer Lagerelementausnehmung angeordneten Lagerelement,
- **Fig. 6:**: eine perspektivische Ansicht eines Abschnittes einer Strebe als Teil einer Tragstruktur eines weiteren Heizaggregates mit von dieser getragenen Lagerelementen und,
- **Fig. 7:**: eine Seitenansicht auf einen Abschnitt der Strebe der Figur 6 mit einem in die gezeigte Lagerelementausnehmung eingesetzten Lagerelement,
- **Fig. 8:**: eine perspektivische Darstellung eines Heizbandes gemäß einer weiteren Ausgestaltung für ein elektrische Heizaggregat,
- **Fig. 9:**: ein Ausschnitt des elektrischen Heizaggregates mit dem Heizband der Figur 8 zum Darstellen der Anordnung der Lagerelemente zum Halten des Heizbandes,
- **Fig. 10:**: die anströmseitige Tragstruktur des elektrischen Heizaggregates gemäß einer ersten Ausgestaltung der Tragstruktur und
- **Fig. 11:**: die anströmseitige Tragstruktur des elektrischen Heizaggregates gemäß einer anderen Ausgestaltung der Tragstruktur.

Ein Heizaggregat H ist zum Erwärmen eines Gasstromes stromauf bezüglich eines für seinen Betrieb eine gegenüber Umgebungstemperatur erhöhte Temperatur benötigenden Aggregates, etwa eines Katalysators, vorgesehen und entsprechend angeordnet. Dieses wird nachstehend anhand eines Ausführungsbeispiels, bei dem das Heizaggregat H in den Abgasstrang einer Abgasreinigungsanlage 1 eingeschaltet ist, beschrieben. Der Einsatzzweck des Heizaggregates H ist nicht auf eine solche Anwendung beschränkt, sondern kann in einer Vielzahl anderer Verwendungen in gleicher Weise eingesetzt werden.

Eine Abgasreinigungsanlage 1 ist an einen Dieselmotor 2 als beispielhafte Brennkraftmaschine eines in der Figur nicht dargestellten Fahrzeuges angeschlossen. Die einzelnen Aggregate der Abgasreinigungsanlage 1 sind in den Abgasstrang 3 des Dieselmotors 2 eingeschaltet. Die Abgasreinigungsanlage 1 des dargestellten Ausführungsbeispiels umfasst einen Oxidationskatalysator 4. In demselben Gehäuse wie der Oxidationskatalysator 4 befindet sich, diesem unmittelbar vorgeschaltet, ein elektrisches Heizaggregat H. Dem Oxidationskatalysator 4 bzw. der Einheit bestehend aus dem Heizaggregat H und dem Oxidationskatalysator 4 in Strömungsrichtung des Abgases nachgeschaltet ist ein Partikelfilter 5 angeordnet, der die in dem Abgasstrom mitgeführten Feinstoffpartikel, wie beispielsweise Rußpartikel, aus dem Abgasstrom herausfiltert. Diese werden auf der anströmseitigen Oberfläche des Dieselpartikelfilters 5 akkumuliert.

In Strömungsrichtung des den Abgasstrang 3 durchströmenden Abgases ist dem Partikelfilter 5 nachgeschaltet ein SCR-Katalysator 6 vorgesehen. Da auch der SCR-Katalysator 6 ebenso wie der Oxidationskatalysator 4 eine gewisse Betriebstemperatur benötigen, um die gewünschten Reaktionen an ihren katalytischen Oberflächen durchführen zu können, ist dem SCR-Katalysator 6 ebenfalls in demselben Gehäuse unmittelbar ein Heizaggregat H vorgeschaltet. Die für die beiden Katalysatoren 4, 6 verwendeten Heizaggregate H sind gleich aufgebaut.

Dem Ausgang des Partikelfilters 5 nachgeschaltet, trägt der Abgasstrang 3 eine Reduktionsmittelzuführung 7, die der Einfachheit halber nur mit ihrem in den Abgasstrang 3 hineinreichenden Injektor 8 gezeigt ist. Über diesen wird Reduktionsmittel zum Betreiben des SCR-Katalysators 6 dem den Abgasstrang 3 durchströmenden Abgasstrom beigemengt. Das in flüssiger Form als Precursor in den Abgasstrom eingebrachte Reduktionsmittel (Ammoniak) wird in einem in der Figur nicht dargestellten Reduktionsmittelbehälter bevorratet, der über eine Reduktionsmittelleitung mit dem Injektor 8 verbunden ist. Bei dem dargestellten Ausführungsbeispiel wird Harnstofflösung (Urea) als Ammoniak-Precursor über den Injektor 8 in den Abgasstrang 3 eingebracht.

Zum Erfassen von für den Betrieb der Abgasreinigungsanlage 1 erforderlicher Kenndaten des den Abgasstrang 3 durchströmenden Abgasstromes verfügt die Abgasreinigungsanlage 1 über entsprechende Sensoren. In der Figur sind beispielhaft zwei Temperatursensoren 9, 9.1 gezeigt, wobei der Temperatursensor 9 dem SCR-Katalysator 6 in Strömungsrichtung des Abgases vorgeschaltet und der Temperatursensor 9.1 dem SCR-Katalysator 6 nachgeschaltet ist. Die Abgasreinigungsanlage 1 kann weitere Sensoren umfassen, insbesondere auch Temperatursensoren vor und nach dem Oxidationskatalysator 4 und/oder dem Partikelfilter 5 sowie Drucksensoren oder andere Sensoren.

Eine Steuereinrichtung 10 dient zum Ansteuern der Abgasreinigungsanlage 1. Die Steuereinrichtung 10 des dargestellten Ausführungsbeispiels verfügt über eine Schnittstelle 11, über die die Steuereinrichtung 10 an eine in der Figur nicht dargestelltes Motormanagement des Fahrzeuges angeschlossen ist. Der Steuereinrichtung 10 zugehörig ist ein Kennfeldspeicher 12, in dem abgasstromrelevante Kennfelddaten hinterlegt sind.

Die Abgasreinigungsanlage 1 kann weitere Komponenten, wie beispielsweise ein oder mehrere Akustikmodule, einen Reduktionsmittelschlupfkatalysator, dem SCR-Katalysator 6 nachgeschaltet, oder dergleichen umfassen.

Die abgasdurchströmten Komponenten der Abgasreinigungsanlage 1 sind wärmeisoliert (in der Figur nicht dargestellt), um auf diese Weise ein Auskühlen des Abgases auf seiner Strömungsstrecke von dem Dieselmotor 2 zu dem Oxidationskatalysator 4 und zu dem SCR-Katalysator 6 zu minimieren. Diese Maßnahme hilft auch, die Katalysatoren 4, 6 länger auf Betriebstemperatur zu halten, wenn der Dieselmotor 2 aufgrund beispielsweise einer Fahrtunterbrechung oder einer Pause für eine gewisse Zeit ausgestellt wird.

Nachstehend ist das Heizaggregat H des Oxidationskatalysators 4 näher beschrieben. Das dem SCR-Katalysator 6 vorgeschaltete Heizaggregat H ist genauso aufgebaut.

Das Heizaggregat H umfasst eine Einfassung 13 aus Stahlblech. Die Einfassung 13 setzt sich fort in das Gehäuse des Oxidationskatalysators 4. Die Querschnittsfläche der Einfassung 13 ist bei dem dargestellten Ausführungsbeispiel kreisförmig. Das elektrische Heizaggregat H verfügt als elektrisches Widerstandsheizelement über ein Heizband 14, welches mäanderförmig die durch die Einfassung 13 bereitgestellte Querschnittsfläche füllt. Durch die mäanderförmige Formung des Heizbandes 14 verfügt dieses über eine Vielzahl paralleler Heizbandabschnitte 15, wobei zwei benachbarte Heizbandabschnitte jeweils durch nur eine Heizbandumbiegung 16 miteinander verbunden sind. Die Länge der Heizbandabschnitte 15 nimmt von einem randlichen Ende des Heizbandes 14 zur Mitte der Einfassung 13 hin zu und anschließend wieder ab, um auf diese Weise die Innenkontur der Einfassung 13 nachempfinden zu können. Elektrisch kontaktiert ist das Heizband 14 an seinen beiden endseitigen Heizbandabschnitten 15.1 jeweils mittels eines elektrischen Abschlussbolzens 17, 17.1, dessen elektrischer Leiter 18, 18.1 an den jeweils endseitigen Heizbandabschnitt 15.1 angeschlossen ist. Die Anschlussbolzen 17, 17.1 sind mit der Einfassung verschweißt.

Gehalten ist das Heizband 14 in der Einfassung durch eine nach Art eines Gerüstes bei dem dargestellten Ausführungsbeispiel ausgeführte Tragstruktur 19. Die Tragstruktur 19 umfasst mehrere Streben 20 - 23, die mit ihrem stirnseitigen Ende an die Einfassung 13 innenseitig angeschlossen sind. Die Streben 20 und 21 sowie 22 und 23 sind durch Querverbinder 24 miteinander verbunden. Die Streben 21, 22 sind durch ihre hutförmige Profilierung im Bereich ihrer Schenkel miteinander verbunden. Das aus den Streben 21, 22 gebildete Strebenpaar befindet sich im Bereich der Mitte der Einfassung 13. Die beiden anderen Streben 20, 23 befinden sich im randlichen Bereich des Strömungsquerschnittes der Einfassung 13. Diese Streben 20, 23 befinden sich in unmittelbarer Nachbarschaft zu der Zone der Heizbandumbiegungen 16. Aufgrund der kreisförmigen Querschnittsfläche der Einfassung 13 sind die Streben 20, 23 entsprechend gewinkelt ausgeführt, um den gekrümmten Randverlauf angenähert zu folgen.

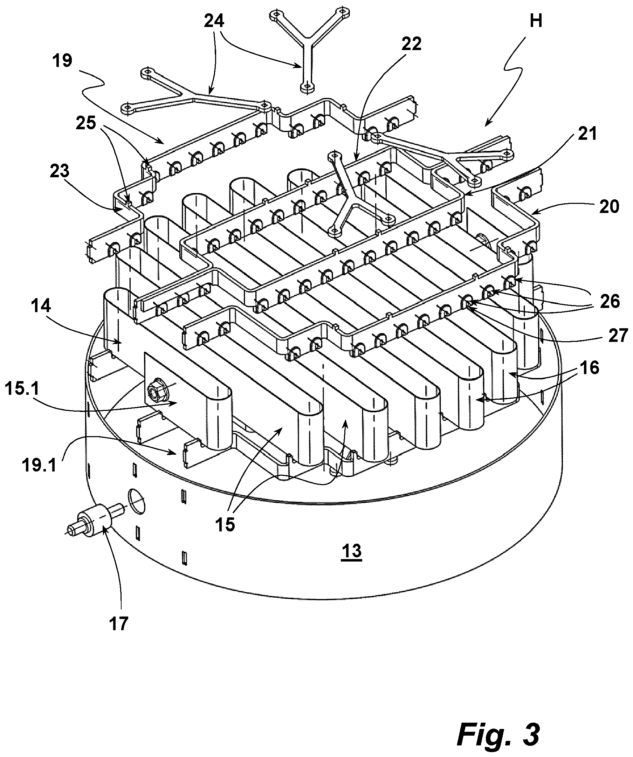

Die Streben 20 - 23 sind durch Metallleisten bereitgestellt, wie dieses der Explosionsdarstellung der Figur 3 entnehmbar ist. Zur Anbindung der Streben 20 - 23 verfügen diese an ihren endseitigen Stirnseiten über Anbindungsfortsätze, die in entsprechende Ausnehmungen der Einfassung 13 eingreifen und darin stoffschlüssig fixiert sind. Zum Anschluss der Querverbinder 24 an die Streben 23 - 23 tragen die leistenförmigen Streben 20 - 23 jeweils nach oben abragende Anbindungsfortsätze 25, an die ein Querverbinder 24, der bei dem dargestellten Ausführungsbeispiel Y-förmig ausgeführt ist, angeschlossen ist. Zu diesem Zweck tragen die Querverbinder 25 endseitige Verbreiterungen mit einer darin eingebrachten Aussparung, damit diese auf die Anbindungsfortsätze 25 der Streben 20 - 23 aufgesetzt und miteinander gefügt werden können. Auf diese Weise erhält die aus den Streben 20 - 23 gebildete Tragstruktur 19 eine für die erforderlichen Zwecke ausreichende Stabilität.

Die Tragstruktur 19 dient zum Halten des Heizbandes 14 innerhalb der Einfassung 13. Bei dem dargestellten Ausführungsbeispiel befindet sich eine Tragstruktur 19 an der anströmseitigen Stirnfläche des mäanderförmigen Heizbandes 14 und eine zweite Tragstruktur 19.1, die genauso aufgebaut ist wie die Tragstruktur 19, an der abströmseitigen Stirnfläche.

Die Streben 20 - 23 der Tragstruktur 19 sind an ihrer zu dem Heizband 14 weisenden Seite kammförmig ausgeführt. In jede Kammausnehmung ist ein Lagerelement 26 eingesetzt. Die Lagerelemente 26 sind bei dem dargestellten Ausführungsbeispiel aus einer elektrisch nicht leitenden Keramik gefertigt. Damit erfolgt über die Lagerelemente 26 und die Anschlussbolzen 17 und 17.1 bei diesem Ausführungsbeispiel die elektrische Isolierung zwischen dem Heizband 14 und der Einfassung 13.

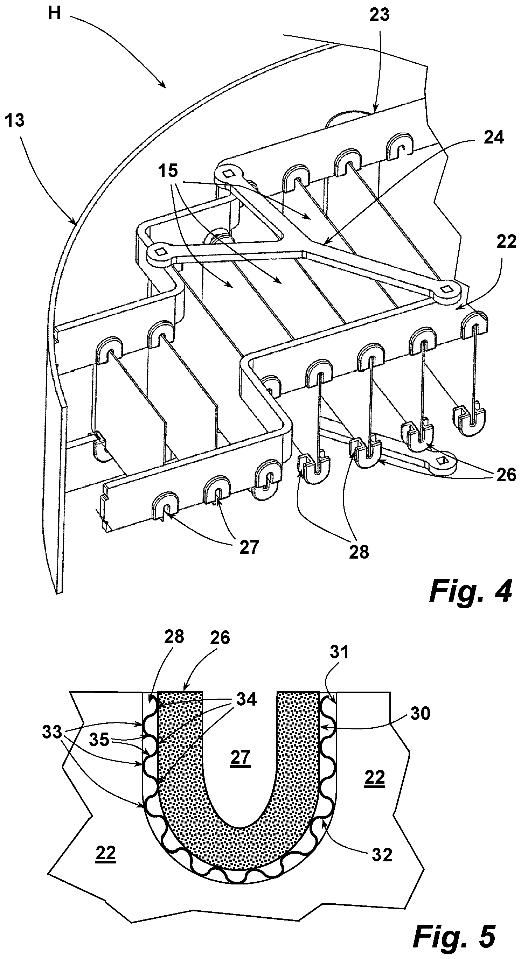

Die Lagerelemente 26 sind, wie aus der Schnittdarstellung der Figur 4 erkennbar, mit ihrer von dem Heizband 14 bzw. von den Heizbandabschnitten 15 wegweisenden Seiten U-förmig ausgeführt. Dementsprechend sind auch die komplementären Ausnehmungen in den Streben 20 - 23 konzipiert. In Figur 4 sind einige Lagerelemente 26 ohne die diese haltende Strebe - die der Strebe 22 an der anderen Stirnseite gegenüberliegende Strebe - gezeigt. Die Lagerelemente 26 verfügen über ein schlitzförmiges Heizbandlager 27. Die lichte Weite des Heizbandlagers 27 entspricht etwa der 1,1- bis 3-fachen Materialstärke des darin eingreifenden Randes eines Heizbandabschnittes 15. Die Lagerelemente 26 tragen außenseitig eine Nut 28, in die die Einfassung der U-förmigen Ausnehmung einer Strebe 20 - 23 eingreift. Hierdurch ist das Lagerelement 26 in Querrichtung zur Längserstreckung der jeweiligen Strebe 20 - 23 formschlüssig gehalten.

Figur 5 zeigt in einem Ausschnitt eine Seitenansicht der Strebe 22 mit einem in eine U-förmig ausgeführte Lagerelementausnehmung 29 eingesetztes Lagerelement 26. Letzteres ist im Schnitt gezeigt. Dieses gilt auch für seine Nut 28, deren Sohle 30 infolge der Schnittebene erkennbar ist. Die Sohle 30 ist von der zu der Sohle 30 weisenden Stirnseite 31 der Lagerelementausnehmung 29 beabstandet. Zwischen der Stirnseite 31 und der Sohle 30 ist ein strukturiertes Ausgleichselement 32 eingesetzt. Das Ausgleichselement 32 besteht aus einem Aktivlotstreifen mit Titan als aktivem Element. Das Ausgleichselement 32 ist bei dem dargestellten Ausführungsbeispiel sinusartig gewellt, wobei durch die Amplitude dieser Wellung der Abstand zwischen der Stirnseite 31 der Lagerelementausnehmung 29 von der Sohle 30 der Nut 28 des Lagerelementes 26 überbrückt wird. In der in Figur 5 gezeigten eingesetzten Stellung des Lagerelementes 26 in die Lagerelementausnehmung 29 unter Zwischenschaltung des Ausgleichselementes 32 wirkt die Sohle 30 des Lagerelementes 26 mit einer geringen Vorspannkraft gegen das Ausgleichselement 32. Infolge der vorbeschriebenen Strukturierung des Ausgleichselementes 32 umfasst dieses erste Abschnitte 33, die die Stirnseite 31 der Lagerelementausnehmung 29 kontaktieren, und zweite Abschnitte 34, die die Sohle 30 des Lagerelementes 26 kontaktieren. Die ersten und zweiten Abschnitte 33, 34 sind durch Stege 35 miteinander verbunden. Die Stege 35 sind gegenüber der Oberfläche der Sohle 30 bzw. der Stirnseite 31 geneigt. Auf diese Weise ist das Lagerelement 26 in der Lagerelementausnehmung 29 in Querrichtung zu der Flucht seines Heizbandlagers 27 nachgiebig gelagert. Die ersten und zweiten Abschnitte 33, 34 sind mit der jeweilig angrenzenden Oberfläche - der Stirnseite 31 der Lagerelementausnehmung 29 bzw. der Sohle 30 des Lagerelementes 26 - verlötet. Bei dem in dem dargestellten Ausführungsbeispiel verwendeten Aktivlot zur Bereitstellung des Ausgleichselementes 32 ist ein solches eingesetzt worden, welches mit einer Temperatur von etwa 1.000°C unter Vakuum mit den angrenzenden Oberflächen der Stirnseite 31 bzw. der Sohle 30 verlötet worden ist. Da die zwischen den ersten und zweiten Abschnitten 33, 34 befindlichen Stege 35 keinen Kontakt zu einem Fügepartner haben, reagieren diese auf die unter Vakuum durchgeführte Temperatureinwirkung nicht, sodass diese Abschnitte für die gewünschten Lagerzwecke flexibel bleiben. Das Ausgleichselement 32 des dargestellten Ausführungsbeispiels weist eine Materialstärke von etwa 50 µm auf und hat eine Länge zum vollständigen Ausfüllen der Lagerelementausnehmung 29 von etwa 12 mm. Grundsätzlich ist es ausreichend, das Lagerelement 26 mit Aktivlotstreifen lediglich im Bereich seiner parallelen Schenkelaußenseiten anzuordnen.

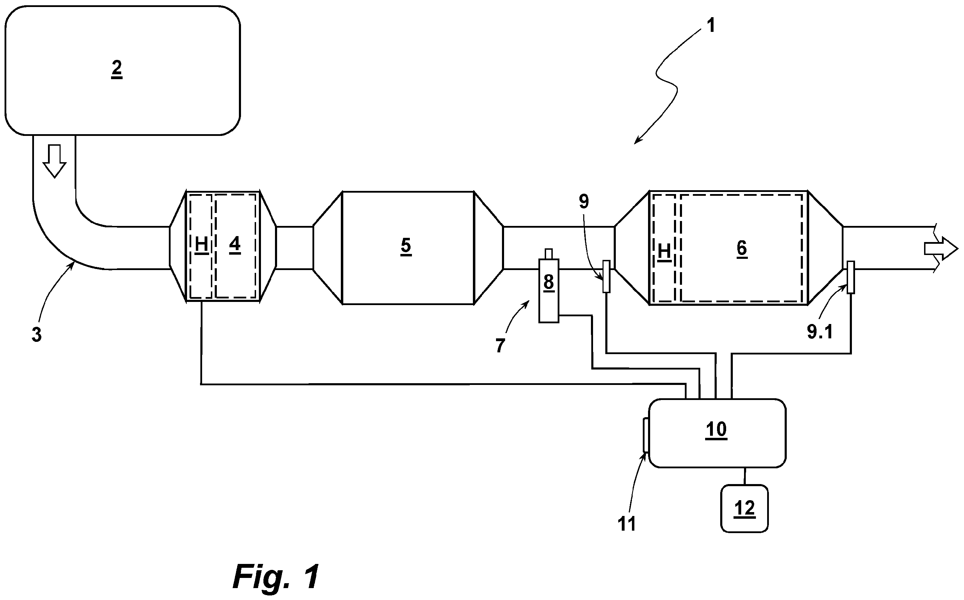

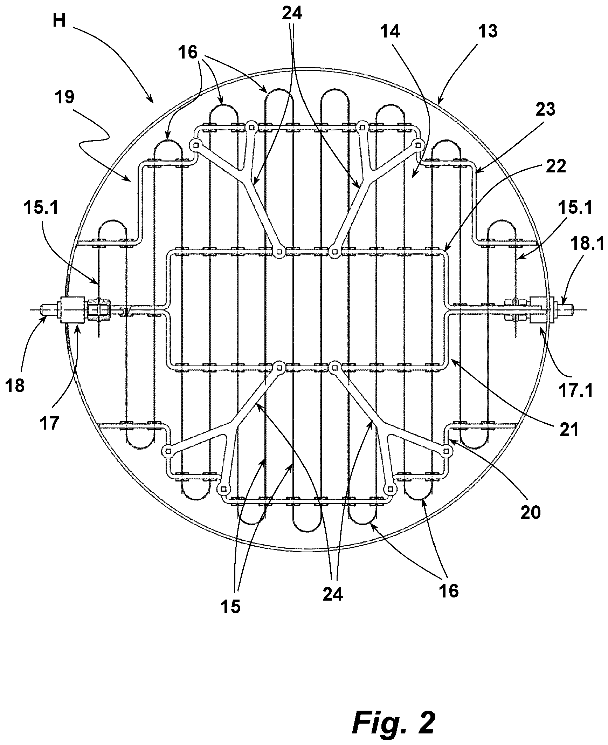

Bei dem in den Figuren 1 bis 4 dargestellten Ausführungsbeispiel sind sämtliche Lagerelemente 26 auf die zu Figur 5 beschriebene Art und Weise mit der Tragstruktur 19 verbunden. Es versteht sich, dass durchaus die Lagerelemente in unterschiedlichen Abschnitten der Tragstruktur 19 auf unterschiedliche Weise an die Tragstruktur 19 angeschlossen sein können.

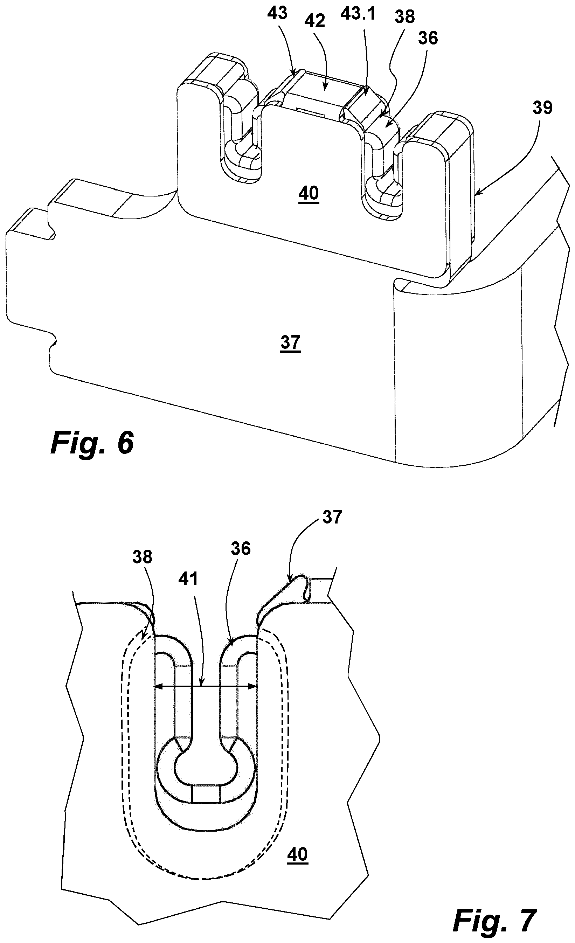

Die Figuren 6 und 7 zeigen eine alternative Lagerung von Lagerelementen 36 an einer Strebe 37 als Teil einer Tragstruktur eines im Übrigen nicht näher dargestellten Heizaggregates. Dieses ist mit Ausnahme der Lagerung der Lagerelemente 36 an der Tragstruktur, wie am Beispiel der Strebe 37 nachstehend erläutert, dem Heizaggregat H des vorangegangenen Ausführungsbeispiels. Bei dem Ausführungsbeispiel der Figuren 6 und 7 ist die kammartige Ausbildung der Strebe 37 durch die Lagerelementausnehmungen 38 in Richtung zur Mündung derselben hin hinterschnitten. Die Lagerelemente 36 sind daher in der Ebene einer solchen Lagerelementausnehmung 38 formschlüssig darin gehalten. Zur Fixierung der Lagerelemente 36 in den Lagerelementausnehmungen 38 dienen zwei Schließbleche 39, 40, die an den Flachseiten der Strebe 37 befestigt sind, beispielsweise durch Punktschweißungen. Die Schließbleche 39, 40 verfügen über U-förmige Ausnehmungen 41, wobei die Öffnungsweite dieser U-förmigen Ausnehmungen kleiner ist als die in der Ebene der Strebe 37 befindliche Erstreckung der Lagerelemente 36. Die Weite der Ausnehmungen 41 entspricht in etwa der Mündungsweite der Lagerelementausnehmungen 38 an ihrer Engstelle. Durch das Vorspringen der Schließfläche mit einem Abschnitt über den Rand der Lagerelementausnehmungen 38 sind die Lagerelemente 36 in der jeweiligen Lagerelementausnehmung 38 auch in Querrichtung zur Ebene der Strebe 37 bzw. in Längserstreckung des Heizbandlagers formschlüssig gehalten. Die beiden Schließbleche 39, 40 sind durch einen über die Stirnseite der Strebe 37 geführten Verbindungssteg 42 miteinander verbunden. Zum Lagepositionieren der Schließbleche 39, 40 mittels des Verbindungssteges 42 verfügt die Stirnseite der Strebe 37 über zwei Einfassungen 43, 43.1, zwischen die der Verbindungssteg 42 eingreift.

Bei diesem Ausführungsbeispiel besteht die Möglichkeit, dass die Lagerelemente 36 lose innerhalb der jeweiligen Lagerelementausnehmung 38 gehalten sind. Auch bei dieser Ausgestaltung kann zwischen den Lagerelementen 36 und der Stirnseite der Lagerelementausnehmung 38 ein Ausgleichselement angeordnet sein. Dieses braucht aufgrund der vorbeschriebenen formschlüssigen Aufnahme der Lagerelemente 36 in der Lagerelementausnehmung 38 jedoch nicht als strukturierter Aktivlotstreifen ausgeführt zu sein.

In Querrichtung zur Längserstreckung der Strebe 37 können die Lagerelemente 36 auch unter Vorspannung gegen die Schließbleche 39, 40 wirken, sodass diese sodann spiel- und somit klapperfrei in einer solchen Lagerelementausnehmung 38 gehalten sind.

Bei den dargestellten Ausführungsbeispielen sind die schlitzförmigen Heizbandlager 27 als Los-Lager konzipiert. Auf diese Weise ist eine thermische Längenausdehnung der parallelen Heizbandabschnitte 15 gewährleistet. Der Abstand der Heizbandumbiegungen 16 von der Innenwand der Einfassung 13 ist hinreichend groß bemessen, damit auch bei einer Erwärmung des Heizbandes 14 auf seine Maximaltemperatur ein hinreichender Abstand zur elektrischen Isolierung vorhanden bleibt. In diesem Zusammenhang ist zu berücksichtigen, dass bei einer Erwärmung des Heizbandes 14 ebenfalls die Einfassung 13 mit erwärmt wird und sich diese somit ebenfalls ausdehnt.

Als Material des Heizbandes 14 können an sich bekannte Heizbandlegierungen eingesetzt werden, beispielsweise FeCrAl-, NiCr-Legierungen. Die Leistung des Heizbandes 14 wird durch seine Länge, seine Materialstärke und seine Breite (Erstreckung in Richtung der Längsachse der Einfassung 13) bestimmt.

Das Bordnetz des Fahrzeuges, an dem die Abgasreinigungsanlage 1 vergebaut ist, wird mit 48 V betrieben. Das Heizband 14 bzw. das elektrische Heizaggregat H ist ausgelegt, mit etwa 15 kW betrieben werden zu können. Hiermit lassen sich Temperaturen von bis zu 1.000° C erreichen. Der dem Heizaggregat H nachgeschaltete Oxidationskatalysator 4 ist bei dieser beispielhaften Auslegung bereits nach etwa 60 s nach Betrieb des Heizaggregates H soweit erwärmt, dass dessen Temperatur oberhalb seiner Light-Off-Temperatur liegt. Dieses ermöglicht eine Erwärmung des Oxidationskatalysators 4 auf seine Funktionstemperatur auch vor einem Motorstart, sodass die gewünschte katalytische Reaktion an seiner Oberfläche bereits an dem ersten ausgestoßenen Abgas vorgenommen werden kann. Hierdurch wird die Gesamtabgasemission signifikant reduziert, da die nicht gewünschten Emissionen bei nicht auf Betriebstemperatur befindlicher Brennkraftmaschine besonders hoch sind.

Gleiches gilt für den SCR-Katalysator 6, der vor dem Motorstart in gleicher Weise erwärmt wird wie der Oxidationskatalysator 4.

Die stirnseitige Ansicht des elektrischen Heizaggregates H verdeutlicht, dass dieses keinen nennenswerten Abgasgegendruck bereitstellt. Zugleich wird durch die unmittelbare Positionierung des Heizaggregates H anströmseitig vor dem jeweiligen Katalysator 4, 6 ein bestmöglicher Wärmeübergang in das Substrat des Katalysators 4, 6 erreicht, insbesondere auch zum Vorerwärmen desselben vor einem Motorstart oder auch bei nur geringen, insbesondere kühlen Abgasvolumenströmen. Die Erwärmung erfolgt durch das im System vorhandene Gas, durch Wärmestrahlung und Wärmeleitung infolge der Erwärmung der Einfassung 13, die in elektrisch leitender Verbindung mit der Einfassung des nachgeschalteten Katalysators 4, 6 steht.

Aufgrund des dem Oxidationskatalysator 4 unmittelbar vorgeschalteten elektrischen Heizaggregates H hat dieser bereits kurz nach Motorstart seine Betriebstemperatur, sodass eine weitere Erwärmung, nachdem dieser eine Temperatur oberhalb seiner Light-Off-Temperatur erreicht hat, auch durch innermotorische Maßnahmen vorgenommen werden kann, und zwar durch Einbringen von Kohlenwasserstoffen in den Abgasstrom, die an der katalytischen Oberfläche exotherm reagieren, sodass auf diese Weise der Abgasstrom zusätzlich durch diese Maßnahme erwärmt werden kann, die zu einem signifikanten positiven Temperaturhub des Abgases führt. Dieses erwärmte Abgas erwärmt dann den nachgeschalteten Abgasstrang 3. Von Vorteil ist ferner, dass aufgrund dieser Maßnahme der Oxidationskatalysator 4 nicht mehr unmittelbar motornah verbaut werden muss. Daher bestehen bei einer Verwendung eines solchen elektrischen Heizaggregates H größere Designfreiheiten in der Auslegung einer Abgasreinigungsanlage für eine Brennkraftmaschine, wie etwa für einen Dieselmotor 2, wie in den Figuren gezeigt.

Die aktuelle Temperatur innerhalb des Abgasstranges der Abgasreinigungsanlage kann mit den Temperatursensoren 9, 9.1 erfasst werden. Typischerweise ist dem Oxidationskatalysator 4 ebenfalls ein Temperatursensor vorgeschaltet. Über die Steuereinrichtung 10 wird sodann auch der Motorstart gesteuert, der erst freigegeben wird, wenn zumindest der Oxidationskatalysator 4 durch das elektrische Heizaggregat H bis auf eine Temperatur oberhalb seiner Light-Off-Temperatur erwärmt worden ist. Insofern kann dieser Vorgang mit dem bei älteren Dieselfahrzeugen erforderlichen Vorglühen verglichen werden.

Dasjenige, was vorstehend anhand eines Motorstartes erläutert worden ist, gilt gleichfalls bei einem Betrieb des Dieselmotors 2 in solchen Betriebsmodi, bei denen die Abgastemperatur nicht ausreicht, um die Katalysatoren 4, 6 auf Betriebstemperatur zu bringen. Die elektrischen Heizaggregate H können in einem solchen Fall dauerhaft für den notwendigen Temperaturhub im Abgasstrom sorgen. Es versteht sich, dass diese dann nicht mit der für einen Kaltstart benötigten Leistung betrieben werden müssen. Ebenfalls ist ein intermittierender Betrieb der Heizaggregate H möglich, ebenso wie eine Kombination mit der Anhebung der Temperatur im Abgasstrang durch innermotorische Maßnahmen.

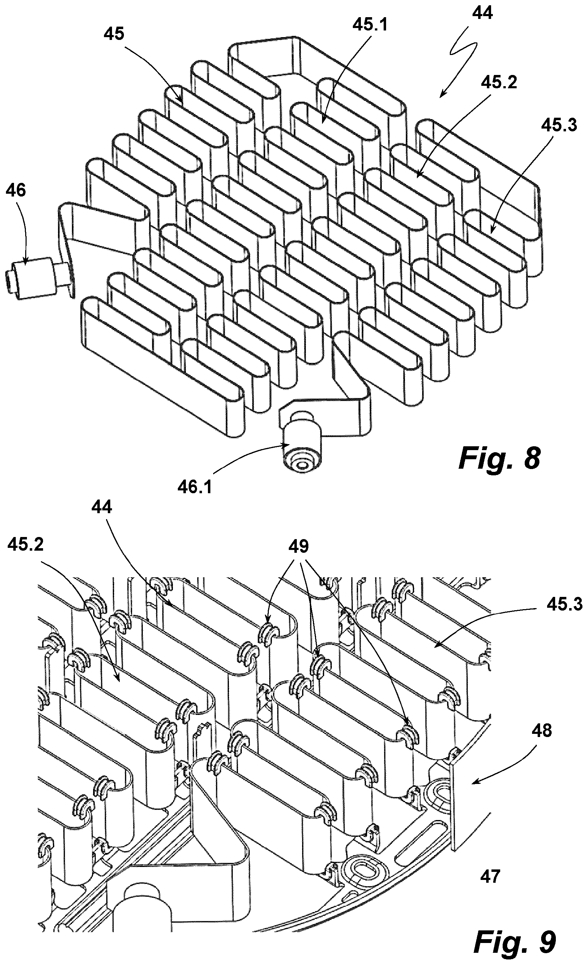

Figur 8 zeigt eine andere Ausgestaltung eines Heizbandes 44 eines im Übrigen nicht näher dargestellten elektrischen Heizaggregates zum Erwärmen eines Gasstroms. Das Heizband 14 des in den vorangegangenen Figuren beschriebenen Ausführungsbeispiels ist einfach mäandriert. Die Amplitude der Mäandrierung des Heizbandes 14 verläuft quer zu dem Abstand der beiden Anschlussbolzen 17, 17.1. Das Heizband 44 weist eine erste Mäandrierung auf, die der Mäandrierung des Heizbandes 14 entspricht. Diese erste Mäandrierung ist überlagert von einer zweiten Mäandrierung, sodass bei dem Heizband 44 vier Mäanderstränge 45, 45.1, 45.2, 45.3 nebeneinander angeordnet sind. Zwei benachbarte Mäanderstränge 45, 45.1; 45.1, 45.2; 45.2, 45.3 sind jeweils durch einen Heizbandabschnitt miteinander verbunden. Die an den beiden Enden des Heizbandes 44 befindlichen Anschlussbolzen 46, 46.1 befinden sich an derselben Seite.

Bei dem Heizband 44 ist die Amplitude der ersten Mäandrierung in den Mäandersträngen 45, 45.1, 45.2, 45.3 gleich groß. Die perspektivische Darstellung des Heizbandes 44 verdeutlicht, dass über die Querschnittsfläche des Heizaggregates eine größere Heizbandlänge als bei dem Ausführungsbeispiel des Heizbandes 14 untergebracht ist.

Das Heizband 44 des dargestellten Ausführungsbeispiels ist anströmseitig und abströmseitig durch eine Tragstruktur 47, 47.1 gehalten (siehe Figur 9). In der Darstellung der Figur 9 ist nur die Tragstruktur 47 erkennbar, da die Tragstruktur auf 47.1 zum Gestatten eines Einblickes weggelassen ist. Ein Teil der Einfassung 48 ist ebenfalls erkannbar.

Das Heizband 44 ist an den Tragstrukturen 47, 47.1 unter Zwischenschaltung von Lagerelementen 49 gehalten, wie dieses zu dem Ausführungsbeispiel der vorstehenden Figuren beschrieben ist. Die Lagerelemente 49 sind vorzugsweise mit strukturiertem Aktivlot zum Bereitstellen eines Ausgleichselementes, insbesondere wie dieses zu dem zuvor beschriebenen Ausführungsbeispiel dargestellt ist, an eine Tragstruktur 47 bzw. 47.1 angeschlossen.

Gemäß einem anderen Ausführungsbeispiel ist vorgesehen, dass die Lagerelemente mit einem unstrukturierten Aktivlotstreifen oder mit Aktivlotpaste an das Traggerüst angeschlossen sind.

Die Anordnung der Lagerelemente 49 ist so gewählt, dass einige Lagerelemente 49 im Scheitel einer Umbiegung und andere an den zwischen zwei Umbiegungen befindlichen Heizbandabschnitt, und zwar vor dem Übergang in die gegenüberliegende Umbiegung angeordnet sind. Die Weite der schlitzförmigen Lagerausnehmung der Heizelemente 49 ist so bemessen, dass auch bei einer Anordnung derselben in einer Umbiegung das Heizband darin nach Art eines Loslagers gehalten ist. Durch diese Anordnung der Lagerelemente ist jeder Mäanderstrang 45, 45.1, 45.2, 45.3 des Heizbandes 44 in zwei Richtungen fixiert.

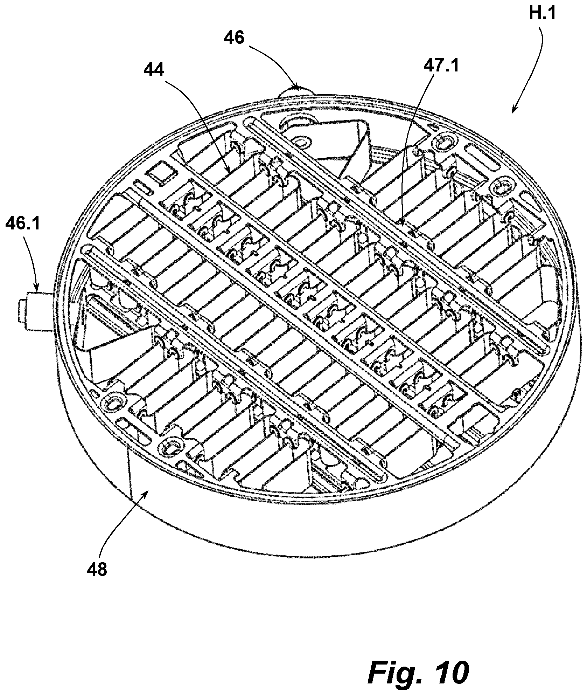

Figur 10 zeigt das elektrische Heizaggregat H.1 mit dem Heizband 44 und der in Figur 9 nicht dargestellten Tragstruktur 47.1.

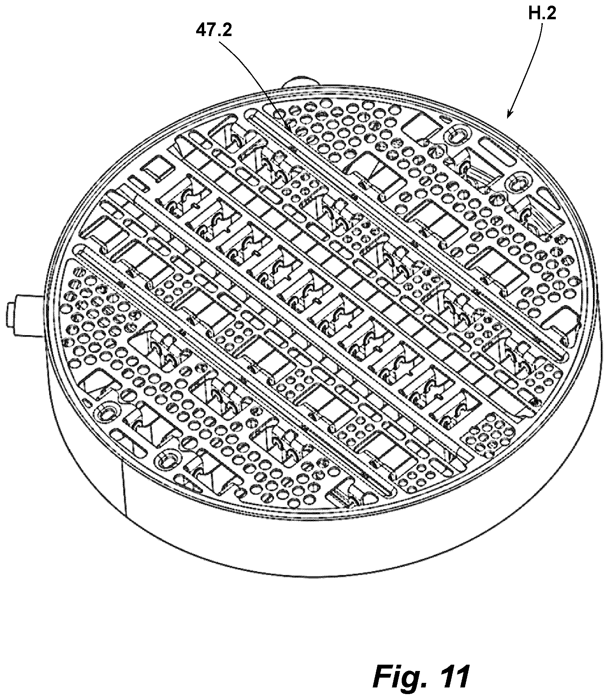

Figur 11 zeigt ein weiteres elektrisches Heizaggregat H.2 mit Blick auf seine anströmseitige Tragstruktur 47.2. Das Heizaggregat H.2 unterscheidet sich von dem Heizaggregat H.1 lediglich durch die Ausgestaltung der Tragstruktur 47.2. Im Übrigen gelten die vorstehenden Ausführungen zu dem elektrischen Heizaggregat H.1 gleichermaßen für das Heizaggregat H.2. Diese Tragstruktur 47.2 dient zugleich als Gleichverteilungselement. Zu diesem Zweck ist die Tragstruktur nach Art einer Prallplatte ausgebildet, in die je der gewünschten Strömungs- und Erwärmungsgleichverteilung Durchbrechungen eingebracht sind. Hierbei handelt es sich um Lochraster und Langlöcher sowie durchgängig offene Schlitze.

Die Beschreibung der Erfindung verdeutlicht, dass mit der beschriebenen Abgasreinigungsanlage 1 ein effizientes, synergetisches Zusammenwirken der einzelnen Aktoren einschließlich des Dieselmotors bezüglich eines Temperaturmanagements der Katalysatoren 4, 6 bereitgestellt ist, um Emissionen, insbesondere NOx-Emissionen gerade in temperaturkritischen Betriebszuständen der Brennkraftmaschine zu reduzieren.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten die Erfindung umzusetzen, ohne dass dieses im Rahmen dieser Ausführungen näher erläutert werden müsste.

### Bezugszeichenliste

| | | | |
|---|---|---|---|
| 1 | Abgasreinigungsanlage | 36 | Lagerelement |
| 2 | Dieselmotor | 37 | Strebe |
| 3 | Abgasstrang | 38 | Lagerelementausnehmung |
| 4 | Oxidationskatalysator | 39 | Schließblech |
| 5 | Partikelfilter | 40 | Schließblech |
| 6 | SCR-Katalysator | 41 | Ausnehmung |
| 7 | Reduktionsmittelzuführung | 42 | Verbindungssteg |
| 8 | Injektor | 43, 43.1 | Einfassung |
| 9, 9.1 | Temperatursensor | 44 | Heizband |
| 10 | Steuereinrichtung | 45, 45.1 - 45.3 | Mäanderstrang |
| 11 | Schnittstelle | 46, 46.1 | Anschlussbolzen |
| 12 | Kennfeldspeicher | 47, 47.1, 47.2 | Tragstruktur |
| 13 | Einfassung | 48 | Einfassung |
| 14 | Heizband | 49 | Lagerelement |
| 15, 15.1 | Heizbandabschnitt | H, H.1, H.2 | elektrisches Heizaggregat |
| 16 | Heizbandumbiegung | | |
| 17, 17.1 | elektrischer Anschlussbolzen | | |
| 18, 18.1 | elektrischer Leiter | | |
| 19, 19.1 | Tragstruktur | | |
| 20 - 23 | Strebe | | |
| 24 | Querverbinder | | |
| 25 | Anbindungsfortsatz | | |
| 26 | Lagerelement | | |
| 27 | Heizbandlager | | |
| 28 | Nut | | |
| 29 | Lagerelementausnehmung | | |
| 30 | Sohle | | |
| 31 | Stirnseite | | |
| 32 | Ausgleichselement | | |
| 33 | erster Abschnitt | | |
| 34 | zweiter Abschnitt | | |
| 35 | Steg | | |

## Patentansprüche

1. Elektrisches Heizaggregat zum Einbringen in den Abgasstrang (3) einer Brennkraftmaschine (2), insbesondere stromauf bezüglich eines für seinen Betrieb eine gegenüber Umgebungstemperatur erhöhte Temperatur benötigenden Abgasreinigungsaggregates (4, 6), etwa eines Katalysators, welches elektrische Heizaggregat (H, H.1, H.2) eine Einfassung (13, 48) und zumindest ein als Band ausgeführtes, innerhalb der Einfassung (13, 48) gehaltenes Widerstandsheizelement (14) umfasst, wobei das zumindest eine Heizband (14, 44) mäanderförmig und mit seiner Flachseite parallel oder weitgehend parallel zur Längsachse der Einfassung (13, 48) verlaufend angeordnet ist, **dadurch gekennzeichnet, dass** das Heizaggregat (H) zumindest eine stirnseitig bezüglich des Heizbandes (14, 44) angeordnete und an die Einfassung (13) mechanisch angeschlossene Tragstruktur (19, 19.1; 47, 47.1, 47.2) mit schlitzförmigen Heizbandlagern (27) zum Halten des Heizbandes (14, 44) innerhalb der Einfassung (13, 48) umfasst, in welche schlitzförmige Heizbandlager (27) das Heizband (14, 44) mit einem Randabschnitt eingreift und über welche Tragstruktur (19, 19.1, 47, 47.1, 47.2) das Heizband (14, 44) gegenüber der Einfassung (13, 48) elektrisch isoliert ist.

2. Elektrisches Heizaggregat nach Anspruch 1, **dadurch gekennzeichnet, dass** die Tragstruktur (19, 19.1, 47, 47.1, 47.2) nach Art eines Gerüstes mit mehreren quer zum Längsverlauf der Heizbandabschnitte (15) verlaufenden Streben (20 - 23), die an ihrer zu dem Heizband (14, 44) weisenden Seite die schlitzförmigen Heizbandlager (27) aufweisen, ausgeführt ist.

3. Elektrisches Heizaggregat nach Anspruch 2, **dadurch gekennzeichnet, dass** benachbarte Streben (20, 21; 22, 23) durch Querverbinder (24) miteinander verbunden sind.

4. Elektrisches Heizaggregat nach Anspruch 2 oder 3, **dadurch gekennzeichnet, dass** die gerüstartige Tragstruktur (19, 19.1; 47, 47.1, 47.2) aus Metall gefertigt ist und an die zum Heizband (14, 44) weisende Seite Lagerelemente (26) aus einem elektrisch nicht leitenden Material, etwa einer Keramik, mit jeweils einem schlitzförmigen Heizbandlager (27) angeschlossen sind.

5. Elektrisches Heizaggregat nach Anspruch 4, **dadurch gekennzeichnet, dass** die Streben (20 - 23) der Tragstruktur (19, 19.1; 47, 47.1, 47.2) leistenförmige Metallstreifen sind, die mit ihrer Schmalseite zu der Stirnseite des Heizbandes (14, 44) weisen und Ausnehmungen zum Einsetzen jeweils eines Lagerelementes (26) aufweisen.

6. Elektrisches Heizaggregat nach Anspruch 5, **dadurch gekennzeichnet, dass** die Lagerelemente (26) an ihrer Außenseite jeweils eine Nut (28) aufweisen, in die der Rand einer Ausnehmung einer Strebe (20 - 23) eingreift.

7. Elektrisches Heizaggregat nach einem der Ansprüche 4 bis 6, **dadurch gekennzeichnet, dass** die Lagerelemente (26) kraftschlüssig an die Tragstruktur (19, 19.1; 47, 47.1, 47.2) angeschlossen sind.

8. Elektrisches Heizaggregat nach Anspruch 7, **dadurch gekennzeichnet, dass** die Lagerelemente unter Zwischenschaltung zumindest eines Ausgleichselementes (32), wobei das mindestens eine Ausgleichselement (32), mit dem ein Lagerelement (26) in einer Lagerelementausnehmung (29) der Tragstruktur (19, 19.1; 47, 47.1, 47.2) gehalten ist, ein durch eine Wechselfolge von ersten und zweiten Abschnitten (33, 34) strukturierter Aktivlotstreifen ist, dessen erste und zweite Abschnitte (33, 34) in Richtung der Ausgleichswirkung zwischen dem Lagerelement (26) und der Lagerelementaufnahme (29) versetzt zueinander angeordnet und mit dem Lagerelement (26) und der Lagerelementausnehmung (29) der Tragstruktur (19, 19.1; 47, 47.1, 47.2) verlötet sind, oder dass die Lagerelementausnehmungen (38) in Richtung zu der freien Stirnfläche der Tragstruktur (37) hinterschnitten sind und dass die Tragstruktur (37) Haltemittel (39, 40) umfasst, durch die ein in eine Lagerelementausnehmung (38) eingesetztes Lagerelement (36) in Querrichtung zur Ebene der Lagerelementausnehmung (38) formschlüssig darin gehalten ist.

9. Heizaggregat nach Anspruch 8, **dadurch gekennzeichnet, dass** die die beiden zueinander versetzten Abschnitte (33, 34) verbindenden Stege (35) eines solchen Aktivlotstreifens als Ausgleichselement (32) in Bezug auf die Ebenen der zueinander weisenden Fügepartner geneigt sind.

10. Elektrisches Heizaggregat nach einem der Ansprüche 1 bis 7, **dadurch gekennzeichnet, dass** die Heizbandlager (27) als Los-Lager ausgeführt sind, demzufolge der eingreifende Heizbandabschnitt (15) in Richtung seiner Längserstreckung verschieblich darin gehalten ist.

11. Elektrisches Heizaggregat nach einem der Ansprüche 1 bis 10, **dadurch gekennzeichnet, dass** die Tragstruktur (19, 19.1; 47, 47.1, 47.2) jeweils benachbart zu einer für die mäanderförmige Formgebung benötigte Umbiegungszone des Heizbandes (14, 44), in der zwei benachbarte Heizbandabschnitte (15) durch eine Heizbandumbiegung (16) verbunden sind, jeweils eine Strebe (20 - 23) und zwischen diesen randlichen Streben (20 - 23) zumindest eine weitere Strebe (20 - 23) umfasst und dass die Heizbandlager (27) der randlichen Streben (20 - 23) als Fest-Lager und diejenigen der zumindest einen zwischen diesen randlichen Streben (20 - 23) befindliche Strebe (20 - 23) als Los-Lager ausgeführt sind.

12. Elektrisches Heizaggregat nach einem der Ansprüche 1 bis 11, **dadurch gekennzeichnet, dass** das Heizband (14, 44) an seinen beiden Stirnseiten jeweils durch eine Tragstruktur (19, 19.1; 47, 47.1, 47.2) gehalten ist.

13. Elektrisches Heizaggregat nach einem der Ansprüche 1 bis 12, **dadurch gekennzeichnet, dass** die zumindest eine Tragstruktur (47.2) anströmseitig zu dem Heizband (44) angeordnet und nach Art einer Durchströmungsöffnungen aufweisenden Prallplatte ausgeführt ist, wobei die Durchströmungsöffnungen ausgelegt und angeordnet sind, um eine Strömungsgleichverteilung in dem das Heizband (44) anströmenden Abgasstrom zu erzielen.

14. Abgasreinigungsaggregat zum Einbringen in den Abgasstrang (3) einer Brennkraftmaschine (2), das für seinen Betrieb eine gegenüber der Umgebungstemperatur erhöhte Temperatur benötigt, **dadurch gekennzeichnet, dass** dem Abgasreinigungsaggregat (4, 6) unmittelbar vorgeschaltet ein elektrisches Heizaggregat (H) nach einem der Ansprüche 1 bis 13 in den Abgasstrang (3) eingeschaltet ist.

15. Abgasreinigungsanlage (1) zum Reduzieren der Emissionen einer Brennkraftmaschine (2) mit zumindest einem Abgasreinigungsaggregat (4, 6) nach Anspruch 14.

## Claims

1. Electrical heating unit for introduction into the exhaust gas system (3) of an internal combustion engine (2), in particular upstream with respect to an exhaust gas cleaning unit (4, 6), for instance of a catalytic converter, which for operation requires a temperature higher than the ambient temperature, said electrical heating unit (H, H.1, H.2) comprising a casing (13, 48) and at least one resistance heating element (14) which is designed as a band and is retained inside the casing (13, 48), wherein the at least one heating band (14, 44) has a meandering shape and is arranged with its flat face extending parallel or substantially parallel to the longitudinal axis of the casing (13, 48), **characterised in that** the heating unit (H) comprises at least one support structure (19, 19.1; 47, 47.1, 47.2) which is located on the end face relative to the heating band (14, 44) and is mechanically connected to the casing (13), with slot-shaped heating band bearings (27) to retain the heating band (14, 44) inside the casing (13, 48), into which slot-shaped heating band bearings (27) the heating band (14, 44) engages with an edge portion, and by means of which support structure (19, 19.1; 47, 47.1, 47.2) the heating band (14, 44) is electrically insulated from the casing (13, 48).

2. Electrical heating unit according to claim 1, **characterised in that** the support structure (19, 19.1; 47, 47.1, 47.2) is configured in the form of a scaffold with a plurality of braces (20-23), running transverse to the longitudinal extension of the heating band sections (15), which contain the slot-shaped heating band bearings (27) on the side facing towards the heating band (14, 44).

3. Electrical heating unit according to claim 2, **characterised in that** adjacent braces (20, 21; 22, 23) are connected to one another by transverse connecting elements (24).

4. Electrical heating unit according to claim 2 or 3, **characterised in that** the scaffold-like support structure (19, 19.1; 47, 47.1, 47.2) is made of metal, and connected to the side facing towards the heating band (14, 44) are bearing elements (26) made of an electrically nonconductive material (27), such as a ceramic.

5. Electrical heating unit according to claim 4, **characterised in that** the braces (20-23) of the support structure (19, 19.1; 47, 47.1, 47.2) are bar-shaped metal strips, which face with their narrow side towards the face side of the heating band (14, 44), and comprise cut-out openings for the insertion in each case of a bearing element (26).

6. Electrical heating unit according to claim 5, **characterised in that** the bearing elements (26) each comprise a slot (28) on their outer sides, into which the edge of a receiver of a brace (20-23) engages.

7. Electrical heating unit according to any one of claims 4 to 6, **characterised in that** the bearing elements (26) are connected in non-positive fit to the support structure (19, 19.1; 47, 47.1, 47.2).

8. Electrical heating unit according to claim 7, **characterised in that** the bearing elements are soldered to the support structure (19, 19.1; 47, 47.1, 47.2), with the intermediate engagement of a compensation element (32), wherein the at least one compensation element (32), with which a bearing element (26) is held in a bearing element receiver (29) of the support structure (19, 19.1; 47, 47.1, 47.2), is an active soldered strip structured by an alternating sequence of first and second sections (33, 34), of which the first and second sections (33, 34) are arranged offset to one another in the direction of the compensation effect between the bearing element (26) and the bearing element receiver (29), and are soldered to the bearing element (26) and the bearing element receiver (29) of the support structure (19, 19.1; 47, 47.1, 47.2), or that the bearing element cut-out openings (38) are undercut in the direction towards the free face surface of the support structure (37), and that the support structure (37) comprises retaining means (39, 40), by means of which a bearing element (36) inserted into a bearing element cut-out opening (38) is held in it in positive fit in the transverse direction to the plane of the bearing element cut-out opening (38).

9. Heating unit according to claim 8, **characterised in that** the webs (35) of such an active soldered strip as a compensation element (32), connecting the two sections (33, 34) offset to one another, are inclined relative to the planes of the joint partner elements facing one another.

10. Electrical heating unit according to any one of claims 1 to 7, **characterised in that** the heating band bearings (27) are configured as non-locating bearings, as a consequence of which the engaging heating band section (15) is retained in them such as to be movable in the direction of its longitudinal extension.

11. Electrical heating unit according to any one of claims 1 to 10, **characterised in that** the support structure (19, 19.1; 47, 47.1, 47.2) comprises in each case a brace (20-23), and between these peripheral braces (20-23) at least one further brace (20-23), in each case adjacent to a bending zone of the heating band (14, 44) which is required for the meandering shape and in which two adjacent heating band sections (15) are connected by a heating band circlip (16), and that the heating band bearings (27) of the peripheral braces (20-23) are configured as locating bearings and those of the at least one brace (20-23) located between these peripheral braces (20-23) are configured as non-locating bearings.

12. Electrical heating unit according to any one of claims 1 to 11, **characterised in that** the heating band (14, 44) is retained on both its face sides in each case by a support structure (19, 19.1; 47, 47.1, 47.2).

13. Electrical heating unit according to any one of claims 1 to 12, **characterised in that** the at least one support structure (47.2) is arranged upstream of the heating band (44) and is configured in the form of a baffle plate comprising throughflow openings, wherein the throughflow openings are configured and arranged in such a way as to achieve a uniform flow distribution in the exhaust gas flow flowing into the heating band (44).

14. Exhaust gas cleaning device for introduction into the exhaust gas system (3) of an internal combustion engine (2), which for operation requires a temperature higher than the ambient temperature, **characterised in that** an electrical heating unit (H) according to any one of claims 1 to 13 is arranged immediately upstream of the exhaust gas cleaning device (4, 6), introduced into the exhaust gas system (3).

15. Exhaust gas cleaning system (1) for reducing the emissions of an internal combustion engine (2) with at least one exhaust gas cleaning unit (4, 6) according to claim 14.

## Revendications

1. Unité de chauffage électrique à intégrer dans le circuit des gaz d'échappement (3) d'un moteur à combustion interne (2), notamment en amont d'un groupe d'épuration des gaz d'échappement (4, 6), par exemple un catalyseur, nécessitant pour son fonctionnement une température supérieure à la température ambiante, laquelle unité de chauffage (H, H.1, H.2) comporte un cerclage (13, 48) et, maintenu à l'intérieur du cerclage (13, 14), au moins un élément chauffant à résistance (14) conformé en ruban, l'au moins un ruban chauffant (14, 44) présentant une forme de méandre et étant disposé avec sa face plane parallèlement ou en grande partie parallèlement à l'axe longitudinal du cerclage (13, 48), **caractérisée en ce que** l'unité de chauffage (H) comporte au moins une structure porteuse (19, 19.1 ; 47, 47.1, 47.2) disposée frontalement par rapport au ruban chauffant (14, 44) et raccordée mécaniquement par rapport au cerclage (13), avec des paliers de ruban chauffant (27) en forme de fente destinés à maintenir le ruban chauffant (14, 44) à l'intérieur du cerclage (13, 48), dans lesquels paliers de ruban chauffant (27) en forme de fente s'engage le ruban chauffant (14, 44) par un tronçon de bord et grâce à laquelle structure porteuse (19, 19.1 ; 47, 47.1, 47.2) le ruban chauffant (14, 44) est isolé électriquement par rapport au cerclage (13, 48).

2. Unité de chauffage électrique selon la revendication 1, **caractérisée en ce que** la structure porteuse (19, 19.1, 47, 47.1, 47.2) est conformée à la manière d'un échafaudage avec plusieurs étais (20 à 23) s'étendant perpendiculairement à l'étendue longitudinale des tronçons de ruban chauffant (15), qui présentent, sur leur côté orienté vers le ruban chauffant (14, 44), les paliers de ruban chauffant (27) en forme de fente.

3. Unité de chauffage électrique selon la revendication 2, **caractérisée en ce que** les étais (20, 21, 22, 23) voisins sont reliés les uns aux autres par des liaisons transverses (24).

4. Unité de chauffage électrique selon la revendication 2 ou 3, **caractérisée en ce que** la structure porteuse (19, 19.1 ; 47, 47.1, 47.2) à la manière d'un échafaudage est fabriquée en métal et que des éléments de paliers (26) réalisés dans un matériau non conducteur d'électricité, par exemple en céramique, munis respectivement d'un palier de ruban chauffant (27) en forme de fente sont raccordés au côté orienté vers le ruban chauffant (14, 44).

5. Unité de chauffage électrique selon la revendication 4, **caractérisée en ce que** les étais (20 à 23) de la structure porteuse (19, 19.1 ; 47, 47.1, 47.2) sont des bandes métalliques en forme de baguette qui sont orientées par leur face étroite vers la face frontale du ruban chauffant (14, 44) et présentent des évidements pour y engager respectivement un élément de palier (26).

6. Unité de chauffage électrique selon la revendication 5, **caractérisée en ce que** les éléments de palier (26) présentent chacun une rainure (28) sur leur face extérieure, dans laquelle s'engage le bord d'un évidement d'un étai (20 à 23)

7. Unité de chauffage électrique selon l'une des revendications 4 à 6, **caractérisée en ce que** les éléments de palier (26) sont raccordés par serrage mécanique sur la structure porteuse (19, 19.1 ; 47, 47.1, 47.2).

8. Unité de chauffage selon la revendication 7, **caractérisée en ce que** les éléments de palier sont maintenus par l'intermédiaire d'au moins un élément d'équilibrage (32), l'au moins un élément d'équilibrage (32) par lequel un élément de palier (26) est maintenu dans un évidement d'élément de palier (29) de la structure porteuse (19, 19.1 ; 47, 47.1, 47.2) étant un filet de brasage actif structuré par une succession de premiers et de seconds tronçons (33, 34), dont les premiers et les seconds tronçons (33, 34) sont disposés, dans le sens de l'effet d'équilibrage, en quinconce entre l'élément de palier (26) et le logement d'élément de palier (29) et sont assemblés par un brasage réalisé entre l'élément de palier (26) et l'évidement d'élément de palier (29) de la structure porteuse (19, 19.1 ; 47, 47.1, 47.2), ou **en ce que** les évidements d'élément de palier (38) sont contre-découpés en direction de la surface frontale libre de la structure porteuse (37) et **en ce que** la structure porteuse (37) comporte des moyens de fixation (39, 40) par lesquels un élément de palier (36) engagé dans un évidement d'élément de palier (38) est maintenu par serrage mécanique dans celui-ci, perpendiculairement au plan de l'évidement d'élément de palier (38).

9. Unité de chauffage selon la revendication 8, **caractérisée en ce que** les étais (35) d'un tel filet de brasage actif, lesquels relient les deux tronçons (33, 34) en quinconce l'un par rapport à l'autre, font office d'élément d'équilibrage (32) et sont inclinés par rapport aux plans des pièces à jointer orientées l'une vers l'autre.

10. Unité de chauffage électrique selon l'une des revendications 1 à 7, **caractérisée en ce que** les paliers de ruban chauffant (27) sont conformés en tant que paliers libres, ce qui a pour conséquence que le tronçon de ruban chauffant (15) qui y est engagé est maintenu en permettant une translation dans le sens de son étendue longitudinale.

11. Unité de chauffage électrique selon l'une des revendications 1 à 10, **caractérisée en ce que** la structure porteuse (19, 19.1 ; 47, 47.1, 47.2) comporte, au voisinage de chaque zone de courbure du ruban chauffant (14, 44), laquelle est nécessaire pour lui donner une forme de méandre, là où deux tronçons (15) voisins de ruban chauffant sont reliés par une courbure (16) de ruban chauffant, respectivement un étai (20 à 23) et entre ces étais (20 à 23) de bord, au moins un étai supplémentaire (20 à 23), et **en ce que** les paliers de ruban chauffant (27) des étais (20 à 23) de bord sont conformés en tant que paliers fixes et que ceux de l'au moins un étai (20 à 23) situé entre ces étais (20 à 23) de bord, sont conformés en tant que paliers libres.

12. Unité de chauffage électrique selon l'une des revendications 1 à 11, **caractérisée en ce que** le ruban chauffant (14, 44) est maintenu par ses deux faces frontales par respectivement une structure porteuse (19, 19.1 ; 47, 47.1, 47.2).

13. Unité de chauffage électrique selon l'une des revendications 1 à 12, **caractérisée en ce que** l'au moins une structure porteuse (47.2) est disposée du côté de l'arrivée du flux vers le ruban chauffant (44) et est conformée à la manière d'une plaque déflectrice présentant des ouvertures de passage permettant la circulation, lesquelles ouvertures de passage permettant la circulation étant conformées et disposées de manière à obtenir une répartition homogène de la circulation du flux des gaz d'échappement arrivant sur le ruban chauffant (44).

14. Groupe d'épuration des gaz d'échappement à intégrer dans le circuit des gaz d'échappement (3) d'un moteur à combustion interne (2), nécessitant pour son fonctionnement une température plus élevée que la température ambiante, **caractérisé en ce qu'**une unité de chauffage (H) électrique selon l'une des revendications 1 à 13 est montée dans le circuit des gaz d'échappement (3) directement à l'amont du groupe d'épuration des gaz d'échappement (4, 6).

15. Installation d'épuration des gaz d'échappement (1) destinée à réduire les émissions d'un moteur à combustion interne (2), comportant au moins un groupe d'épuration des gaz d'échappement (4, 6) selon la revendication 14.
